(19) **Europäisches Patentamt / European Patent Office / Office européen des brevets**

(11) **EP 4 389 844 A1**

(12) **EUROPEAN PATENT APPLICATION**
published in accordance with Art. 153(4) EPC

(43) Date of publication:
**26.06.2024 Bulletin 2024/26**

(21) Application number: **22858503.0**

(22) Date of filing: **18.08.2022**

(51) International Patent Classification (IPC):
**C09J 7/38** (2018.01)    **C09J 133/00** (2006.01)
**C09J 175/04** (2006.01)    **C09J 201/00** (2006.01)

(52) Cooperative Patent Classification (CPC):
**C09J 7/38; C09J 133/00; C09J 175/04;**
**C09J 201/00**

(86) International application number:
**PCT/JP2022/031148**

(87) International publication number:
**WO 2023/022185 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.08.2021 JP 2021135181**

(71) Applicant: **Nitto Denko Corporation**
**Ibaraki-shi, Osaka 567-8680 (JP)**

(72) Inventors:
• **MIZUNO, Mizuho**
**Ibaraki-shi, Osaka 567-8680 (JP)**
• **TANAKA, Akiko**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **ADHESIVE SHEET**

(57)    Provided is a PSA sheet having an active energy ray-curable PSA layer that is less susceptible to reduction of hardness to the curable component. The PSA sheet provided comprises an active energy ray-curable PSA layer. The PSA forming the PSA layer comprises a base polymer and a resin A. The resin A is an active energy ray-curable resin having a glass transition temperature of 0 °C or higher by DSC analysis.

[Fig. 1]

FIG.1

EP 4 389 844 A1

**Description**

[Technical Field]

The present invention relates to a pressure-sensitive adhesive sheet, in particular, a pressure-sensitive adhesive sheet comprising an active energy ray-curable pressure-sensitive adhesive layer.
This application claims priority to Japanese Patent Application No. 2021-135181 filed on August 20, 2021; and the entire content thereof is incorporated herein by reference.

[Background Art]

Pressure-sensitive adhesive (PSA) exists as a viscoelastic material in a room temperature range and has a property to adhere to an adherend with some pressure applied. With such properties, PSA is widely used (typically as a PSA sheet with a PSA layer formed of the PSA) in various industrial fields such as home appliances, automobiles, various types of machinery, electrical equipment, and electronic equipment.
Some PSAs are designed to be curable by active energy rays. One example of such active energy ray-curable PSAs is a PSA comprising a base polymer and an active energy ray-curable component. Technical documents relating to this type of active energy ray-curable PSA include Patent Documents 1 and 2.

[Citation List]

[Patent Literature]

[Patent Document 1] Japanese Patent Application Publication No. 2018-019022
[Patent Document 2] Japanese Patent Application Publication No. 2003-301147

[Summary of Invention]

[Technical Problem]

With respect to an active energy-ray curable PSA (hereinafter, "active energy ray-curable" may be abbreviated to "curable") comprising a base polymer and an active energy ray-curable component, the present inventor has focused on that, in general, the active energy ray-curable component has a lower molecular weight than the base polymer and is included uncured; and therefore, the PSA tends to suffer a decrease in hardness (e.g., tensile modulus) as compared with a PSA having the same composition, but without the curable component. If the hardness of the active energy ray-curable PSA is far below the suitable range for the purpose, the PSA sheet having the curable PSA may suffer problems such as less ease of processing and handling, and insufficient shape retention of the curable PSA.
The present invention was created in view of these circumstances with an objective to provide a PSA sheet having an active energy ray-curable PSA layer with a reduced decrease in hardness (less softening) due to the curable component included.

[Solution to Problem]

This description provides a PSA sheet comprising an active energy ray-curable PSA layer. The PSA forming the PSA layer comprises a base polymer and a resin A. The resin A is an active energy ray-curable resin having a glass transition temperature (Tg) of 0 °C or higher by DSC analysis. The use of the resin A as the curable component can reduce the decrease in hardness (softening) due to the resin A and also impart curability by active energy rays to the PSA layer.
In some embodiments of the art (including an active energy ray-curable PSA, active energy ray-curable PSA layer formed of the PSA, a PSA sheet having the curable PSA or PSA layer; the same applies, hereinafter) disclosed herein, the resin A has a weight average molecular weight (Mw) of 3000 or higher. The resin A with such a Mw helps inhibit the curable PSA layer from softening due to the resin A included.
In some embodiments, the resin A is at least one species selected from the group consisting of urethane resins, epoxy resins and acrylic resins. The art disclosed herein can be preferably implemented, using such a resin A.
In some embodiments, the resin A content of the PSA can be, for instance, 1 wt% or greater and 70 wt% or less (wt %: % by weight). The inclusion within the range helps favorably bring about desirable properties after curing by active energy rays while reducing softening due to the resin A.

In some embodiments, the PSA further comprises a photoinitiator. The use of the photoinitiator can accelerate the curing by active energy rays (e.g., UV rays).

In some embodiments of the art disclosed herein, the active energy ray-curable PSA layer preferably satisfies the next relational formula E2/E1 ≥ 1.1, wherein E1 (MPa) and E2 (MPa) are the pre-curing and post-curing tensile moduli (before and after active energy ray curing) of the curable PSA layer, respectively. In other words, the curable PSA layer is preferably formulated such that the tensile modulus increases by 1.1 times or more by active energy ray curing.

In some embodiments, the active energy ray-curable PSA layer preferably has a gel fraction of 70 % or higher. When the gel fraction of the curable PSA layer is 70 % or higher, suitable cohesion is likely obtained, possibly leading to advantages in terms of ease of processing and handling, shape retention, etc.

In some embodiments, the active energy ray-curable PSA layer has a thickness of 1.0 $\mu$m or greater and 100 $\mu$m or less. The curable PSA layer with a thickness in this range is readily allowed to suitably cure by active energy rays and exhibit desirable adhesive properties.

In some embodiments, the base polymer is an acrylic polymer. The art disclosed herein can be preferably implemented in an embodiment using an acrylic polymer as the base polymer.

In some embodiments, the base polymer has a calculated Tg below 30 °C. With the use of a base polymer with calculated Tg < 30 °C, the resulting active energy ray-curable PSA layer is likely to show suitable adhesion.

The scope of the invention for which the present patent application seeks patent protection includes a suitable combination of the respective features described above.

[Brief Description of Drawings]

Fig. 1 shows a cross section schematically illustrating the PSA sheet structure according to an embodiment.
Fig. 2 shows a cross section schematically illustrating the PSA sheet structure according to another embodiment.

[Description of Embodiments]

Preferred embodiments of the present invention are described below. Matters necessary to practice this invention other than those specifically referred to in this description may be comprehended by a person of ordinary skill in the art based on the instruction regarding implementations of the invention according to this description and the common technical knowledge in the pertinent field. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate sizes or reduction scales of products actually provided.

The concept of PSA sheet herein encompasses so-called PSA tapes, PSA labels, PSA films and the like. The PSA sheet disclosed herein may be in a roll form or in a flat sheet form. The PSA sheet may be further processed into various shapes.

As used herein, the "base polymer" of a PSA refers to the primary component among the rubbery polymers in the PSA. The rubbery polymer refers to a polymer that exhibits rubber elasticity in a room temperature range. As used herein, the "primary component" refers to a component accounting for more than 50 % by weight of the content unless otherwise noted.

As used herein, the term "acrylic polymer" refers to a polymerization product comprising a monomeric unit derived from a monomer that has at least one (meth)acryloyl group per molecule. Hereinafter, the monomer having at least one (meth)acryloyl group per molecule is referred to as an "acrylic monomer" as well. Accordingly, as used herein, an acrylic polymer is defined as a polymer comprising a monomeric unit derived from an acrylic monomer. Typical examples of the acrylic polymer include a polymer formed from monomers including more than 50 % (preferably more than 70 %, e.g., more than 90 %) acrylic monomer by weight. Typical examples of the acrylic polymer include a polymer such that acrylic monomers account for more than 50 wt% (preferably more than 70 wt%, e.g., more than 90 wt%) of all the monomers used for synthesizing the acrylic polymer. Hereinafter, a monomer used for the polymer synthesis may be referred to as a monomer forming the polymer.

As used herein, the term "(meth)acryloyl" comprehensively refers to acryloyl and methacryloyl. Similarly, the term "(meth)acrylate" comprehensively refers to acrylate and methacrylate, and the term "(meth)acryl" comprehensively refers to acryl and methacryl. Thus, the concept of acrylic monomer here encompasses both a monomer having an acryloyl group (acrylic monomer) and a monomer having a methacryloyl group (methacrylic monomer).

In this description, "weight" may be read as "mass." For instance, "% by weight (wt%)" may be read as "% by mass (mass%)" and "parts by weight" as "parts by mass."

<Structural examples of PSA sheet>

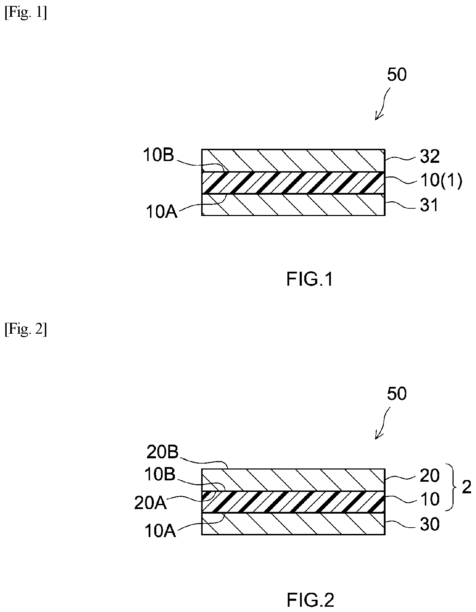

Fig. 1 shows a structural example of the PSA sheet disclosed herein. PSA sheet 1 is formed of an active energy ray-curable PSA layer 10 and is an adhesively double-faced PSA sheet without substrate (or a substrate-free double-faced PSA sheet). For instance, as shown in Fig. 1, PSA sheet 1 before use (before application to an adherend) may be in the form of a release-linered PSA sheet 50 in which the respective faces 10A and 10B of PSA layer 10 are protected with release liners 31 and 32 having a releasable surface (release face) at least on the PSA layer side. In an alternative form, with the backside (the surface opposite to the PSA layer side) of release liner 31 being a release face, adhesive faces 10A and 10B can be protected by winding or layering to bring adhesive face 10B to come in contact with the backside of release liner 31.

The release liner is not particularly limited. For instance, it is possible to use a release liner obtained by release treatment of a surface of a liner substrate such as plastic film and paper, a release liner formed from a low-adhesive material such as fluoropolymer (polytetrafluoroethylene, etc.) and polyolefinic resin (polyethylene, polypropylene, etc.), or the like. In the release treatment, for instance, release agents such as silicone-based, long-chain alkyl-based and the like can be used. In some embodiments, a release-treated resin film can be preferably used as the release liner.

Fig. 2 shows another structural example of the PSA sheet disclosed herein. PSA sheet 2 comprises an active energy ray-curable PSA layer 10 whose one surface 10A is an adhesive face (face applied to an adherend) and a substrate (support) 20 laminated to the other surface 10B of PSA layer 10; and is formed as an adhesively single-faced PSA sheet (single-faced PSA sheet with substrate). PSA layer 10 is bonded to one surface 20A of substrate 20. As substrate 20, for instance, a resin film such as polyester film can be used. PSA sheet 2 before use may be in the form of a release-linered PSA sheet 50 in which adhesive face 10A is protected with a release liner 30 having a releasable surface (release face) at least on the PSA layer side. In an alternative form, with the second face 20B (the surface opposite to the first face 20A and also referred to as the backside) of substrate 20 being a release face, adhesive face 10A can be protected by winding or layering to bring adhesive face 10A to come in contact with the second face 20B of substrate 20.

The PSA sheet disclosed herein may be in the form of a double-faced PSA sheet with substrate, the PSA sheet having a first PSA layer laminated to one surface of a substrate sheet and a second PSA layer laminated to the other surface of the substrate. Here, the first PSA layer is an active energy ray-curable PSA layer. The second PSA layer can be an active energy ray-curable PSA layer having the same or a different composition as the first PSA layer, or it may not be curable with active energy rays. The double-faced PSA sheet with substrate has first and second adhesive faces formed of the first and second PSA layers, respectively. Like substrate-free double-faced PSA sheet 1 shown in Fig. 1, the double-faced PSA sheet with substrate before use may be in the form of a release-linered PSA sheet with the first and second adhesive faces protected with one or two release liner(s).

<Active energy ray-curable PSA layer>

The PSA sheet disclosed herein comprises an active energy ray-curable PSA layer formed of a PSA comprising a base polymer and a resin A that is curable with active energy rays and has a glass transition temperature of 0 °C or higher by DSC analysis. As used herein, "active energy rays" conceptually include light such as ultraviolet (UV) light, visible light and infrared light as well as radioactive rays such as $\alpha$ rays, $\beta$ rays, $\gamma$ rays, electron beam, neutron radiation, and X rays.

The active energy ray-curable resin has an active energy ray-reactive functional group. Examples include curable urethane resins having a polyurethane backbone, curable epoxy resins having an epoxy resin backbone, curable acrylic resins having an acrylic polymer backbone, and curable polyester resins having a polyester backbone. Typical examples of the active energy ray-reactive functional group include ethylenically unsaturated groups. Specific examples of ethylenically unsaturated groups include (meth)acryloyl group, vinyl group and (meth)allyl group. Active energy ray-curable resins having a (meth)acryloyl group can be advantageous in view of obtaining excellent active energy ray-curing properties. Examples of (meth)acryloyl group-containing active energy ray-curable resins include a urethane (meth)acrylate, epoxy (meth)acrylate, (meth)acryloyl group-containing acrylic polymer, and polyester (meth)acrylate.

A urethane (meth)acrylate can be obtained, for instance, by reaction of a polyol compound, a polyisocyanate compound and a hydroxy group-containing (OH-containing) acrylic monomer. More specifically, for instance, it can be obtained by allowing an OH-containing acrylic monomer to react with a polyurethane prepolymer obtainable by reaction of a polyol compound and a polyisocyanate compound; by simultaneous reaction of a polyol compound, a polyisocyanate compound and an OH-containing acrylic monomer; by allowing a polyol compound to react with a polyurethane prepolymer obtainable by reaction of a polyisocyanate compound and an OH-containing acrylic monomer; or by like method. Urethane (meth)acrylates synthesized by other known methods can also be used. Commercially-available urethan (meth)acrylates can be used as well.

The reaction of a polyol compound and a polyisocyanate compound can be carried out by a suitable arbitrary method that can be employed for producing urethane polymers. A urethane polymer can be obtained, for instance, by mixing and stirring a polyol compound and a polyisocyanate compound. In this reaction, an organic solvent (e.g., ethyl acetate, methyl ethyl ketone, chloroform, etc.) free of active hydrogen reactive with isocyanate group and a catalyst (e.g., organic metal catalysts such as tin chloride and organotin compounds; organic bases such as tertiary amine compounds; organic acids such as acetic acid and acrylic acid; etc.) can be added to carry out the reaction.

As for the relative amounts of the polyisocyanate compound and polyol compound, the NCO/OH equivalent weight ratio can be, for instance, 0.01 to 100, or 0.1 to 10. In some embodiments, the NCO/OH equivalent weight ratio is, for instance, 0.1 to 5.0, preferably 0.1 to 2.0, more preferably 0.3 to 1, yet more preferably 0.5 to 1.5, or particularly preferably 0.8 to 1.3. In other embodiments, the NCO/OH equivalent weight ratio is, for instance, 0.2 to 10, preferably 0.5 to 10, more preferably 0.5 to 4.0, yet more preferably 0.6 to 2.0, or particularly preferably 0.7 to 1.3. In some embodiments, it is preferable to add the polyisocyanate compound so as to have an excess of isocyanate groups (NCO) relative to hydroxy groups (OH) in the polyol compound. In other embodiments, it is preferable to add the polyisocyanate compound so that the polyol compound has an excess of hydroxy groups (OH) relative to isocyanate groups (NCO) in the polyisocyanate compound.

Examples of the polyol compound include a polyester polyol (polycondensation product of a divalent alcohol and a dibasic acid such as adipic acid, azelaic acid, sebacic acid, etc.), polyether polyol (addition polymerization products of ethylene oxide, tetrahydrofuran, etc.), polyacrylate polyol, polycarbonate polyol, polyolefin polyol, polybutadiene polyol and hydrogenated product, polyisoprene polyol and hydrogenated product, phenolic polyol, epoxy polyol, polycaprolactone polyol, and polysulfone polyol as well as a copolymer polyol such as polyester-polyether polyol. Favorable examples of the polyol compound include a polyester polyol such as polyethylene adipate glycol, polybutylene adipate glycol, and polyhexamethylene adipate glycol; a polyether polyol such as polytetramethylene ether glycol; and a polycarbonate diol such as 1,6-hexamethylene carbonate glycol. For the polyol compound, solely one species or a combination of two or more species can be used.

Examples of the polyisocyanate compound include hexamethylene diisocyanate, diphenylmethane diisocyanate, tolylene diisocyanate, isophorone diisocyanate, dicyclohexylmethane diisocyanate, tetramethyl xylene diisocyanate, xylylene diisocyanate, naphthalene diisocyanate, trimethylhexamethylene diisocyanate, tolidine diisocyanate, p-phenylene diisocyanate, cyclohexylene diisocyanate, methylene bis(4-phenylmethane)diisocyanate, hexamethylene diisocyanate, dimer acid diisocyanate, hydrogenated tolylene diisocyanate, hydrogenated xylylene diisocyanate, lysine diisocyanate, triphenylmethane triisocyanate, and tri(isocyanatophenyl) triphosphate. For the polyisocyanate compound, solely one species or a combination of two or more species can be used.

For the reaction of a polyurethane prepolymer and an OH-containing acrylic monomer, if necessary, an organic solvent (e.g., ethyl acetate, methyl ethyl ketone, chloroform, etc.) free of active hydrogen reactive with isocyanate group and a catalyst (e.g., organic metal catalysts such as tin chloride and organotin compounds; organic bases such as tertiary amine compounds; organic acids such as acetic acid and acrylic acid; etc.) can be added to carry out the reaction.

As the hydroxy group-containing acrylic monomer, among species having one, two or three (meth)acryloyl groups per molecule, a suitable species can be selected and used. Specific examples of the hydroxy group-containing acrylic monomer include 2-hydroxyethyl (meth)acrylate, 2-hydroxypropyl (meth)acrylate, 4-hydroxybutyl (meth)acrylate, (4-hydroxymethylcyclohexyl)methyl (meth)acrylate, 2-hydroxy-3-phenyloxypropyl (meth)acrylate, neopentyl glycol mono(meth)acrylate, trimethylol propane di(meth)acrylate, and pentaerythritol tri(meth)acrylate. For the hydroxy group-containing acrylic monomer, solely one species or a combination of two or more species can be used.

As for the relative amounts of the polyurethane prepolymer and OH-containing acrylic monomer, with respect to the polyol compound used for producing the polyurethane prepolymer, for instance, the polyol compound to OH-containing acrylic monomer molar ratio can be 1:0.01 to 1:100, 1:0.05 to 1:20, 1:0.05 to 1: 10, 1:0.05 to 1:5, 1:0.05 to 1:1, or 1:0.05 to 1:0.8. In some preferable embodiments, the polyol compound to OH-containing acrylic monomer molar ratio can be 1:0.08 to 1:0.5, or 1:0.1 to 1:0.4. In some embodiments, it is preferable to set the relative amounts of the polyurethane prepolymer and OH-containing acrylic monomer so that the hydroxy groups in the OH-containing acrylic monomer are about equimolar to the isocyanate residues in the polyurethane prepolymer.

An epoxy (meth)acrylate can be obtained, for instance, by allowing an epoxy resin to react with (meth)acrylic acid.

An acrylic polymer having a (meth)acryloyl group can be obtained, for instance, by allowing an acrylic polymer having a prescribed side-chain functional group X to react with a compound having a (meth)acryloyl group and a functional group Y reactive with the functional group X without losing the C-C double bond (C=C) in the (meth)acryloyl group. The reaction between the functional groups X and Y is preferably a reaction without radical formation, such as a condensation reaction or addition reaction.

Examples of the combination of functional groups X and Y include a combination of carboxy and epoxy groups, a combination of carboxy and aziridyl groups, and a combination of hydroxy and isocyanate groups. In particular, in view of reaction traceability, a combination of hydroxy and isocyanate groups is preferable. As long as a C=C-containing polymer is obtained, in the combination of functional groups X and Y, one functional group can be considered as the functional group X and the other as the functional group Y, or vice versa. For instance, with respect to a combination of a hydroxy group and an isocyanate group, one possibility is that the functional group X is the hydroxy group and the functional group Y is the isocyanate group, or another possibility is that the functional group X is the isocyanate group and the functional group Y is the hydroxy group. For example, a favorable (meth)acryloyl group-containing acrylic polymer has a structure formed by reaction of an OH-containing acrylic polymer with an isocyanate/(meth)acryloyl group-containing compound (e.g., 2-methacryloyloxyethyl isocyanate).

A polyester (meth)acrylate can be obtained, for instance, by allowing (meth)acrylic acid to react with a polyester with terminal hydroxyl groups obtainable from a polyol and a polycarboxylic acid.

Examples of commercially-available active energy ray-curable resins include urethane (meth)acrylates such as SHIKOH UV series available from Mitsubishi Chemical Corporation, ART RESIN UN series available from Negami Chemical Industrial Co.,Ltd., NK OLIGO U series available from Shin-Nakamura Chemicals Co., Ltd., QUICK CURE series available from KJ Chemicals Corporation, KUA series available from KSM Co., Ltd., EBECRYL series available from Daicel-Allnex Ltd., and ARONIX M-1100 and M-1200 available from Toagosei Co., Ltd.; epoxy (meth)acrylates such as RIPOX SP series and VR series available from Showa Highpolymer Co., Ltd., and EPOXY ESTER series available from Kyoeisha Chemical Co., Ltd.; polyester (meth)acrylates such as ARONIX M-6000 series (e.g., M-6100, M-6200, M-6250, M-6500), M-7000 series (e.g., M-7100, M-7300), M-8000 series (e.g., M-8030, M-8060, M-8100, M-8530, M-8560), and M-9000 series (e.g., M-9050) available from Toagosei Co., Ltd.; polyfunctional (meth)acrylates such as ARONIX M-208, M-211B, M-215, M-220, M-225, M-270, M-240, M-309, M-310, M-321, M-350, M-360, M-313, M-315, M-306, M-305, M-303, M-452, M-450, M-408, M-403, M-400, M-402, M-404, M-406 and M-405 available from Toagosei Co., Ltd., LIGHT ACRYLATE 4EG-A, LIGHT ACRYLATE 9EG-A, LIGHT ACRYLATE NP-A, LIGHT ACRYLATE MPD-A, LIGHT ACRYLATE 1.6HX-A, LIGHT ACRYLATE 1.9ND-A, LIGHT ACRYLATE MOD-A, LIGHT ACRYLATE DCP-A, and LIGHT ACRYLATE BP-4EAL available from Kyoeisha Chemical Co., Ltd., and SR-531 and CD-536 available from Sartomer Company Inc.

(Resin A)

As the resin A in the art disclosed herein, among active energy ray-curable resins as those described above, a species that satisfies a certain condition (i.e., a species having a glass transition temperature (Tg) of 0 °C or higher by DSC analysis) is used. Such a resin A can be used as a curable component to reduce the decrease in hardness due to the inclusion of the resin A while making the PSA layer curable with active energy rays. Here, the glass transition temperature of an active energy ray-curable resin by DSC analysis is determined by the method shown below. The same is true with Examples described later.

It can be determined, using a differential scanning calorimeter (e.g., a temperature-modulated DSC under product name Q-2000 available from TA Instruments, or its equivalent). In particular, in an aluminum open cell, approximately 7 mg to 10 mg of the measurement sample is weighed, covered with a lid and sealed. An empty aluminum open cell is used as a reference sample. Under nitrogen gas flow at 50 ml/min, the temperature was raised at a rate of 2 °C/min from -80 °C to 100 °C to obtain a reverse heat flow (specific heat component) thermogram. With reference to JIS K7121, the glass transition temperature (Tg) is determined as the midpoint glass transition temperature (the temperature at the point where the step-like part of the glass transition curve intersects with the straight line vertically equidistant between the low temperature-side and high-temperature-side straight lines extending from the reverse heat flow baselines). When two or more step-like parts are found in the reverse heat flow, the glass transition temperatures (midpoint glass transition temperatures) corresponding to the respective step-like parts are determined and referred to as the first glass transition temperature ($Tg_1$), the second glass transition temperature ($Tg_2$) ... from the low temperature side. At least one of these needs to be 0 °C or higher.

As the resin A, an active energy ray-curable resin with $Tg \geq 0$ °C by DSC can be used without particular limitations. In view of availability and ease of synthesis as well as ease of adjusting the properties of the curable PSA and its cured product, the resin A is preferably at least one species selected from the group consisting of a urethane resin (e.g., urethane (meth)acrylate), epoxy resin (e.g., epoxy (meth)acrylate), and acrylic resin (e.g., acrylic polymer having a (meth)acryloyl group). In particular, it preferably comprises a urethane (meth)acrylate.

In some embodiments, the resin A preferably has a Tg of 25 °C or higher (more preferably 30 °C or higher, e.g., 35 °C or higher, or 40 °C or higher) by DSC analysis. With the resin A having such a Tg, the decrease in hardness due to the resin A tends to be effectively reduced. The resin A may have two or more Tg values of 25 °C or higher.

In some embodiments, it is preferable that the resin A does not have a Tg below -10 °C by DSC analysis. In other words, the first glass transition temperature (Tgi) is preferably -10 °C or higher (when the resin A has only one Tg, this particular Tg corresponds to the first glass transition temperature ($Tg_1$)). With such a resin A, the decrease in hardness due to the resin A tends to be favorably reduced. The resin A's first glass transition temperature ($Tg_1$) is more preferably -5 °C or higher, or yet more preferably 0 °C or higher. In some embodiments, in view of ease of preparing the PSA composition for forming the PSA layer and ease of forming the curable PSA layer with suitable adhesiveness, the resin A's first glass transition temperature (Tgi) is suitably 70 °C or lower, preferably 60 °C or lower, possibly 50 °C or lower, 40 °C or lower, 30 °C or lower, 20 °C or lower, 10 °C or lower, 7 °C or lower, or 5 °C or lower.

The weight average molecular weight (Mw) of resin A is not particularly limited and can be, for instance, about 1000 to 100000. In view of helping to reduce the decrease in hardness due to the resin A, in some embodiments, the resin A has a weight average molecular weight (Mw) of suitably 2500 or higher, advantageously 3000 or higher, 3500 or higher, preferably 4000 or higher, possibly 4500 or higher, 5000 or higher, 5500 or higher, or 6000 or higher. In view of ease of preparing the PSA composition, compatibility in the curable PSA layer and/or cured material thereof, ease of increasing hardness (e.g., tensile modulus) by curing, etc., in some embodiments, the resin A's Mw is suitably below 50000, preferably below 30000, more preferably below 20000, possibly below 10000, below 8000, below 7000, or even below 6000.

The weight average molecular weight of resin A can be determined based on standard polystyrene by gel permeation chromatography (GPC). In particular, using product name AGILENT 1200 (available from Agilent Technologies, Inc.) or its equivalent as the GPC analyzer, it can be determined by measurement under the conditions shown below. For the weight average molecular weight, if the manufacturer's nominal value or literature value is known, that value may be used. The same applies to the working examples described later.

[GPC conditions]

Sample concentration: 0.2 wt% (N,N-dimethylformamide solution)
Sample injection volume: 40 $\mu$L
Eluent: 10 mM-LiBr (lithium bromide)/N,N-dimethylformamide (DMF)
Flow rate: 0.4 mL/min
Column temperature (measurement temperature): 40 °C
Columns:

Sample columns: product names TSKgel SuperAWM-H $\times$ 1 + TSKgel SuperAW4000 + TSKgel SuperAW2500 $\times$ 3 (available from Tosoh Corporation)
Reference columns: product names TSKgel SuperAWM-H + TSKgel SuperAW4000 + TSKgel SuperAW2500 $\times$ 3 (available from Tosoh Corporation)
Detector: differential refractometer (RI)
Standard specimen: polystyrene

In view of the curability, etc., it is advantageous that the average number of active energy ray-curable functional groups (e.g., (meth)acryloyl groups) that the resin A has per molecule is 2 or more. In view of increasing the effect to cure the PSA layer by curing the resin A with active energy rays, it is preferably 3 or more, possibly 4 or more, 5 or more, or even 6 or more. The maximum number of reactive functional groups is not particularly limited. In some embodiments, in view of reduction of internal stress caused by curing of the curable PSA layer as well as optical properties (e.g., transparency) of the cured material and so on, the number of functional groups of resin A is suitably 20 or less, preferably 16 or less, possibly 12 or less, or even 10 or less.

In some embodiments, in view of curing the resin A to form a network with a suitable density, the resin A's Mw per active energy ray-curable functional group (or "functional group equivalent weight" hereinafter) is suitably 200 or higher, advantageously 250 or higher, preferably 350 or higher, more preferably 400 or higher, possibly 500 or higher, or even 550 or higher. The resin A can have a functional group equivalent weight of 10000 or lower, 8000 or lower, 6000 or lower, or even 5000 or lower. In some embodiments, in view of increasing the curability (effect to cure the PSA layer) by curing the resin A, the resin A has a functional group equivalent weight of suitably 4000 or lower, preferably 3000 or lower, more preferably 2000 or lower, possibly 1000 or lower, 850 or lower, 750 or lower, or even 650 or lower. Here, the resin A's functional group equivalent weight is determined by dividing the resin A's Mw by the number of functional groups.

The amount of resin A used in the curable PSA layer can be, for instance, about 1 wt% to 70 wt% of the curable PSA layer. In view of increasing the effect to cure the PSA layer by curing the resin A with active energy rays, in some embodiments, the amount of resin A used in the curable PSA layer can be 2.5 wt% or more of the curable PSA layer, 4 wt% or more, 8 wt% or more, 12 wt% or more, or even 17 wt% or more. On the other hand, in view of ease of processing the curable PSA layer, efficiency of application to adherends and so on, in some embodiments, the amount of resin A used in the curable PSA layer is suitably 50 wt% or less, preferably 40 wt% or less, more preferably 35 wt% or less, possibly 30 wt% or less, 25 wt% or less, 20 wt% or less, or even 15 wt% or less.

The amount of resin A used with the base polymer in the curable PSA layer can be selected in the range of, for instance, about 1 part to 250 parts by weight per 100 parts by weight of the base polymer. In view of enhancing the effect to cure the PSA layer by curing the resin A with active energy rays, in some embodiments, the amount of resin A used per 100 parts of base polymer can be, for instance, 1.5 parts or greater, 2.0 parts or greater, 2.5 parts or greater, 3.0 parts or greater (e.g., greater than 3.0 parts, or 3.1 parts or greater), 5.0 parts or greater, 6.0 parts or greater, 8.0 parts or greater, 10 parts or greater, 12 parts or greater, 15 parts or greater, 20 parts or greater, or even 25 parts or greater (all parts by weight). On the other hand, in view of ease of processing the curable PSA layer, efficiency of application to adherends and so on, in some embodiments, the amount of resin A used per 100 parts of base polymer is suitably 100 parts or less, possibly 70 parts or less, 50 parts or less, 45 parts or less, 40 parts or less, 35 parts or less, 30 parts or less, 25 parts or less, 20 parts or less, 16 parts or less, 13 parts or less, 11 parts or less, 10 parts or less, 8.0 parts or less, 6.0 parts or less, 5.0 parts or less, 4.0 parts or less, or even 3.5 parts or less (all parts by weight).

In some embodiments, the resin A can be selected in consideration of the equilibrium shear viscosity of 25 wt% solution described next. Here, equilibrium shear viscosity is the viscosity determined from the stress generated when the shear rate is continuously increased from 0.01 (1/s) to 1000 (1/s) over 120 seconds. A 25 wt% solution of resin A has an equilibrium shear viscosity of generally suitably about 1.0 mPa s to 100 mPa s, preferably about 1.5 mPa s to 50 mPa s, about 2.0 mPa·s to 30 mPa·s, about 2.5 mPa·s to 25 mPa·s, about 3.0 mPa·s to 20 mPa·s, 3.5 mPa·s to 15 mPa·s, also about 4.0 mPa s to 10 mPa s, possibly 2.0 mPa s to 12 mPa s, or even about 2.0 mPa s to 6 mPa s. The equilibrium shear viscosity of 25 wt% resin A solution is measured on a 25 wt% ethyl acetate solution of the resin A as a sample, using a commercially-available rheometer (e.g., product name HAAKE RS-600 available from Thermo Fisher Scientific, Inc., or its equivalent) with a cone/plate sensor (ø 60 mm, 1° cone angle). In particular, at a measurement temperature of 23 °C, the solution viscosity (Pa·s) of the coating solution is measured at a shear rate of 0.01 (1/s) for 10 seconds. Subsequently, while changing the shear rate to 1000 (1/s) over 120 seconds, the solution viscosity (Pa·s) is measured. To prevent evaporation of the solvent, the measurement is carried out, using a solvent trap. The 25 wt% ethyl acetate solution of resin A is a Newtonian fluid that exhibits a constant viscosity with respect to shear rate. The equilibrium shear viscosity (Pa·s) of 25 wt% resin A solution is determined as the average value of the solution viscosity measured while changing the shear rate from 100 (1/s) to 1000 (1/s). With respect to the respective curable resins used in Examples described later, the equilibrium shear viscosities of 25 wt% solution (measured using a rheometer, product name HAAKE RS-600 available from Thermo Fisher Scientific, Inc., under the aforementioned conditions) are 4.5 mPa s (R1), 22.5 mPa·s (R2), 2.4 mPa·s (R3), 2.9 mPa·s (R4), 2.4 mPa·s (R5), and 1.7 mPa·s (R6).

(Base polymer)

In the art disclosed herein, the base polymer of the curable PSA layer is not particularly limited. It can be, for instance, an acrylic polymer, rubber-based polymer, polyester, polyurethane, polyether, polyamide, fluoropolymer, etc. For instance, in an embodiment where the resin A is a (meth)acryloyl group-containing active energy ray-curable resin, an acrylic polymer can be preferably used as the base polymer. Described below are mainly a PSA comprising an acrylic polymer as the base polymer and a PSA sheet having a PSA layer formed from the PSA, but the PSA sheet disclosed herein is not limited to this.

In some embodiments, the acrylic polymer as base polymer is a polymerization product of monomers (a monomer mixture) comprising at least 40 wt% (preferably at least 50 wt%) alkyl (meth)acrylate and possibly further comprising a secondary monomer copolymerizable with the alkyl (meth)acrylate as necessary. For instance, a preferable acrylic polymer is a polymerization product of monomers comprising an alkyl (meth)acrylate as the primary monomer. Here, the primary monomer refers to the primary component among the monomers forming the acrylic polymer, that is, a component accounting for more than 50 wt% of the monomers.

For example, a compound represented by the following formula (1) can be favorably used as the alkyl (meth)acrylate.

$$CH_2=C(R^1)COOR^2 \qquad (1)$$

Here, $R^1$ in the formula (1) is a hydrogen atom or a methyl group. $R^2$ is an acyclic alkyl group having 1 to 20 carbon atoms (hereinafter, such a range of the number of carbon atoms may be indicated as "$C_{1-20}$"). From the standpoint of the PSA's storage modulus, etc., an alkyl (meth)acrylate wherein $R^2$ is a $C_{1-14}$ acyclic alkyl group is preferable, and an alkyl (meth)acrylate wherein $R^2$ is a $C_{1-10}$ acyclic alkyl group is more preferable.

Specific examples of the alkyl (meth)acrylate having a $C_{1-20}$ acyclic alkyl group for $R^{12}$ include, but are not limited to, methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. These alkyl (meth)acrylates can be used singly as one species or in a combination of two or more species. Preferable examples of the alkyl (meth)acrylate include n-butyl acrylate (BA) and 2-ethylhexyl acrylate (2EHA).

In some embodiments, a $C_{1-4}$ alkyl (meth)acrylate accounts for 50 wt% or more of the alkyl (meth)acrylates in the monomers. An acrylic polymer having such a monomer composition helps obtain a curable PSA with suitable hardness (e.g., tensile modulus). The $C_{1-4}$ alkyl (meth)acrylate content in the alkyl (meth)acrylates in the monomers can be, for instance, 70 wt% or greater, 85 wt% or greater, 95 wt% or greater, or 100 wt%.

The $C_{1-4}$ alkyl (meth)acrylate content in the total monomers can be, for instance, 50 wt% or greater, 70 wt% or greater, 85 wt% or greater, or 93 wt% or greater. In view of ease of crosslinking and cohesion, it can be 99.5 wt% or less, 97 wt% or less, or 95 wt% or less.

In other embodiments, a $C_{5-20}$ alkyl (meth)acrylate accounts for 50 wt% or more of the alkyl (meth)acrylates in the monomers. An acrylic polymer having such a monomer composition helps obtain a curable PSA with excellent adherend surface conformability and flexibility at low temperatures. The $C_{5-20}$ alkyl (meth)acrylate content in the alkyl (meth)acrylates in the monomers can be, for instance, 70 wt% or greater, 85 wt% or greater, 95 wt% or greater, or 100 wt%.

The $C_{5-20}$ alkyl (meth)acrylate content in the total monomers can be, for instance, 50 wt% or greater, 70 wt% or greater, 85 wt% or greater, or 93 wt% or greater. In view of ease of crosslinking and cohesion, it can be 99.5 wt% or less, 97 wt% or less, or 95 wt% or less.

The secondary monomer copolymerizable with the alkyl (meth)acrylate can be useful for introducing a crosslinking point into the acrylic polymer or for increasing the cohesiveness of the acrylic polymer. For example, solely one species or a combination of two or more species can be used among functional group-containing monomers having an ethylenically unsaturated group and a functional group such as those listed below in one molecule.

Carboxy group-containing monomers: for example, acrylic acid, methacrylic acid, carboxyethyl acrylate, carboxypentyl acrylate, itaconic acid, maleic acid, fumaric acid, crotonic acid and isocrotonic acid;

Acid anhydride group-containing monomers: for example, maleic anhydride and itaconic anhydride;

Hydroxy group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxyauryl (meth)acrylate; unsaturated alcohols such as vinyl alcohol and allyl alcohol; and others including [4-(hydroxymethyl)cyclohexyl]methyl (meth)acrylate, 4-hydroxybutyl vinyl ether, and poly(propylnene glycol) mono(meth)acrylate.

Amide group-containing monomers: for example, (meth)acrylamide, N,N-dimethyl (meth)acrylamide, N-butyl (meth)acrylamide, N-methylol (meth)acrylamide, N-methylolpropane (meth)acrylamide, N-methoxymethyl (meth)acrylamide, and N-butoxymethyl (meth)acrylamide.

Amino group-containing monomers: for example, aminoethyl (meth)acrylate, N,N-dimethylaminoethyl (meth)acrylate, and t-butylaminoethyl (meth)acrylate.

Monomers having an epoxy group: for example, glycidyl (meth)acrylate, methylglycidyl (meth)acrylate, and allyl glycidyl ether.

Cyano group-containing monomers: for example, acrylonitrile and methacrylonitrile.

Keto group-containing monomers: for example, diacetone (meth)acrylamide, diacetone (meth)acrylate, vinyl methyl ketone, vinyl ethyl ketone, allyl acetoacetate, and vinyl acetoacetate.

Monomers having a nitrogen atom-containing ring: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinyl-ε-caprolactam, N-(meth)acryloylmorpholine, N-vinyl-3-morpholinone, N-vinyl-1,3-oxazine-2-one, and N-vinyl-3,5-morpholinedione.

Alkoxysilyl group-containing monomers: for example, 3-(meth)acryloxypropyltrimethoxysilane, 3-(meth)acryloxypropyltriethoxysilane, 3-(meth)acryloxypropylmethyldimethoxysilane, and 3-(meth)acryloxypropylmethyldiethoxysilane.

The amount of the functional group-containing monomer in the monomers forming the acrylic polymer can be suitably selected depending on the purpose and application and is not particularly limited. From the standpoint of suitably obtaining the effect of using the functional group-containing monomer, the amount of the functional group-containing monomer in the monomers is, for example, possibly 0.1 wt% or greater, typically suitably 0.5 wt% or greater, possibly 1 wt% or greater, 2 wt% or greater, or even 3 wt% or greater. In some embodiments, the amount of the functional group-containing monomer in the monomers can also be 8 wt% or greater, 12 wt% or greater, 15 wt% or greater, 20 wt% or greater, 25 wt% or greater, 30 wt% or greater, 35 wt% or greater, or even 40 wt% or greater. From the standpoint of facilitating the balance of adhesive properties, the amount of the functional group-containing monomer in the monomers is typically suitably 60 wt% or less, preferably 50 wt% or less, below 50 wt%, possibly below 45 wt%, below 35 wt%, below 25 wt%, below 15 wt%, below 10 wt%, or even below 7 wt%.

Besides the aforementioned secondary monomers, the monomers forming the acrylic polymer may comprise other comonomers for improving cohesive strength, etc. Examples of such other comonomers include vinyl ester monomers such as vinyl acetate, vinyl propionate, and vinyl laurate; aromatic vinyl compounds such as styrene, substituted styrene (α-methylstyrene and the like), and vinyl toluene; cycloalkyl (meth)acrylates such as cyclohexyl (meth)acrylate, cyclopentyl (meth)acrylate, and isobomyl (meth)acrylate; aromatic ring-containing (meth)acrylates such as aryl (meth)acrylates (e.g. phenyl (meth)acrylate), aryloxyalkyl (meth)acrylates (e.g. phenoxyethyl (meth)acrylate), and arylalkyl (meth)acrylates (e.g. benzyl (meth)acrylate); olefinic monomers such as ethylene, propylene, isoprene, butadiene, and isobutylene; chlorine-containing monomers such as vinyl chloride and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; vinyl ether monomers such as methyl vinyl ether and ethyl vinyl ether; and polyfunctional monomers having two or more (e.g., three or more) polymerizable functional groups (e.g., (meth)acryloyl groups) per molecule, such as 1,6-hexanediol di(meth)acrylate and trimethylolpropane tri(meth)acrylate.

The amount of such other comonomers is not particularly limited and may be suitably selected according to the purpose and application. In some embodiments, in view of suitably obtaining the effects of using the other comonomers, the amount thereof is suitably 0.05 wt% or more of the monomers forming the acrylic polymer, or possibly 0.5 wt% or more. In some embodiments, the amount of the other comonomers is suitably 20 wt% or less, or possibly 10 wt% or less (e.g., 5 wt% or less) of the monomers. The art disclosed herein can be preferably implemented in an embodiment where the monomers are essentially free of other comonomers. Here, that the monomers are essentially free of other comonomers means that other comonomers are not used at least intentionally and unintentional inclusion may be acceptable (e.g., up to about 0.01 wt%).

In some embodiments, the curable PSA may comprise, as the base polymer, an acrylic polymer that is a copolymer of a nitrogen atom-containing monomer (N-containing monomer) and at least one other monomer species. Herein, the concept of N-containing monomer includes a monomer having a polymerizable functional group (typically an ethylenically unsaturated group) and a nitrogen atom without particular limitations. One favorable example of the N-containing monomer is a monomer having a N-containing ring such as those mentioned above. Preferable specific examples include N-vinyl-2-pyrrolidone (NVP), N-vinyl-ε-aprolactam (NVC), and N-acryloylmorpholine (ACMO). For the N-containing monomer, solely one species or a combination of two or more species can be used. By using a N-containing monomer (e.g., a monomer having a N-containing ring), the tensile modulus (pre-curing tensile modulus) of the curable PSA can be effectively increased.

The acrylic polymer that is a copolymer of a N-containing monomer and at least one other monomer species can be obtained, for instance, by copolymerization using an undermentioned monomer in an amount shown below, with the total amount of the monomers copolymerized being 100 parts by weight.

N-containing monomer: 3.0 parts or greater, 5.0 parts or greater, 10.0 parts or greater, 15.0 parts or greater, 20.0 parts or greater, 25.0 parts or greater, 30.0 parts or greater, or 35.0 parts or greater; and 40.0 parts or less, 35.0 parts or less, 30.0 parts or less, 25.0 parts or less, 20.0 parts or less, 15.0 parts or less, 10.0 parts or less, or 5.0 parts or less; for instance, 10.0 parts or greater and 40.0 parts or less (all parts by weight).

OH-containing monomer (e.g., one, two or more species among the aforementioned OH-containing monomers): 0.02 part or greater, 0.05 part or greater, 0.75 part or greater, 1.0 part or greater, 2.0 parts or greater, 3.0 parts or greater, 4.0 parts or greater, 5.0 parts or greater, 6.0 parts or greater, 7.0 parts or greater, 8.0 parts or greater, or 9.0 parts or greater; and 20.0 parts or less, 10.0 parts or less, 9.0 parts or less, 8.0 parts or less, 7.0 parts or less, 6.0 parts or less, 5.0 parts or less, 4.0 parts or less, 3.0 parts or less, 2.0 parts or less, 1.0 part or less, 0.5 part or less or 0.1 part or less; for instance, 0.05 part or greater and 10.0 parts or less (all parts by weight). Alternatively, OH-containing monomers may not be used. In other words, the amount of OH-containing monomer can be 0 part by weight.

carboxy group-containing (COOH -containing) monomer (e.g., one, two or more species among the aforementioned COOH-containing monomers): 0.5 part or greater, 1.0 part or greater, 2.0 parts or greater, 3.0 parts or greater, 4.0 parts or greater, 5.0 parts or greater, 6.0 parts or greater, 7.0 parts or greater, 8.0 parts or greater, or 9.0 parts or greater; and 15.0 parts or less, 10.0 parts or less, 9.0 parts or less, 8.0 parts or less, 7.0 parts or less, 6.0 parts or less, 5.0 parts or less, 4.0 parts or less, 3.0 parts or less, or 2.0 parts or less; for instance, 1.0 part or greater and 10.0 parts or less (all parts by weight). Alternatively, COOH-containing monomers may not be used.

Alkyl (meth)acrylates (e.g., one, two or more species of alkyl (meth)acrylates represented by the formula (1)): while not exceeding the range ((100 parts) - (total amount of monomers used in copolymerization except for alkyl (meth)acrylate monomers)), 5.0 parts or greater, 10.0 parts or greater, 20.0 parts or greater, 30.0 parts or greater, or 40.0 parts or greater; and 95.0 parts or less, 90.0 parts or less, 80.0 parts or less, 70.0 parts or less, 60.0 parts or less, 50.0 parts or less, 40.0 parts or less, 35.0 parts or less, 30.0 parts or less, 25.0 parts or less, 20.0 parts or less, 15.0 parts or less, 10.0 parts or less, or 5.0 parts or less; for instance, 30.0 parts or greater and 95.0 parts or less (all parts by weight). Alternatively, alkyl (meth)acrylates may not be used.

In some embodiments, the curable PSA may include, as the base polymer, an acrylic polymer that is a copolymer of a carboxy group-containing monomer (COOH-containing monomer) and at least one other monomer species (but not a N-containing monomer). The acrylic polymer can be a copolymer obtained, for instance, by copolymerization using an undermentioned monomer in an amount shown below with the total amount of the monomers copolymerized being 100 parts by weight.

COOH-containing monomer (e.g., one, two or more species among the aforementioned COOH-containing monomers): 0.5 part or greater, 1.0 part or greater, 2.0 parts or greater, 3.0 parts or greater, 4.0 parts or greater, 5.0 parts or greater, 6.0 parts or greater, 7.0 parts or greater, 8.0 parts or greater, or 9.0 parts or greater; and 15.0 parts or less, 10.0 parts or less, 9.0 parts or less, 8.0 parts or less, 7.0 parts or less, 6.0 parts or less, 5.0 parts or less, 4.0 parts or less, 3.0 parts or less, or 2.0 parts or less; for instance, 1.0 part or greater and 10.0 parts or less (all parts by weight).

Alkyl (meth)acrylates (e.g., one, two or more species of alkyl (meth)acrylates represented by the formula (1)): 85.0 parts or greater, 90.0 parts or greater, 91.0 parts or greater, 92.0 parts or greater, 93.0 parts or greater, 94.0 parts or greater, 95.0 parts or greater, 96.0 parts or greater, 97.0 parts or greater, or 98.0 parts or greater; and 99.5 parts or less, 99.0 parts or less, 98.0 parts or less, 97.0 parts or less, 96.0 parts or less, 95.0 parts or less, 94.0 parts or less, 93.0 parts or less, 92.0 parts or less, or 91.0 parts or less; for instance, 90.0 parts or greater and 99.0 parts or less (all parts by weight).

The monomers may further include or may not include one, two or more species of monomers (e.g., OH-containing monomer, vinyl ester-based monomer, cycloalkyl (meth)acrylate, etc.) other than COOH-containing monomers, alkyl (meth)acrylates, and N-containing monomers, as far as the total amount of the monomers do not exceed 100 parts by weight.

In some embodiments, by DMA (dynamic mechanical analysis), the base polymer (preferably an acrylic polymer) has a glass transition temperature (Tg) of, for instance, possibly below 30 °C, preferably below 25 °C, also possibly below 20 °C, below 10 °C, or below 0 °C. It may be advantageous that the base polymer has not too high a Tg in view of reducing the decrease in tensile modulus due to the use of resin A while obtaining a curable PSA with tack suited for adhesion to adherends. In some embodiments, for instance, in view of increasing the curable PSA layer's conformability to the adherend surface, by DMA, the base polymer may have a Tg of below -5 °C, or below -10 °C. For instance, it can be below -20 °C, below -25 °C, below -30 °C, further below -40 °C, below -45 °C, below -50 °C, below -55 °C, or even below -60 °C. In view of ease of handling and processing the curable PSA layer, the base polymer's Tg by DMA is suitably -80 °C or higher, preferably -75 °C or higher, possibly -65 °C or higher, or even -55 °C or higher. For instance, it can be -50 °C or higher, -45 °C or higher, also -35 °C or higher, or even -25 °C or higher. In some embodiments, by DMA, the base polymer's Tg by DMA can be -15 °C or higher, -10 °C or higher, -5 °C or higher, 0 °C or higher, 5 °C or higher, or even 15 °C or higher. A base polymer with a higher Tg tends to readily bring about a curable PSA that shows a higher tensile modulus (pre-curing tensile modulus).

The base polymer's Tg by DMA is determined as follows: In particular, a 1 mm thick sheet formed from the base polymer of interest (e.g., a sheet obtained by laminating several PSA layers formed of the base polymer of interest to a desirable thickness) is obtained. From this sheet, a disc (cylindrical body of 1 mm in height and 8 mm in diameter) is punched out to prepare a test piece. Using a dynamic viscoelasticity analyzer (system name ARES G-2, available from TA Instruments, Japan), over the temperature range of -60 °C to 200 °C, at a heating rate of 5 °C/min, the test piece was measured for the loss tangent (tan $\delta$) peak temperature as the glass transition temperature by DMA. As the resin A in the art disclosed herein, it is preferable to use an active energy ray-curable resin having a higher Tg (by DSC) than the base polymer's Tg by DMA. As for a resin A showing two or more Tg values, it is preferable that at least one Tg value among them is higher than the base polymer's Tg by DMA. In some embodiments, the first glass transition temperature of the resin A is preferably higher than the base polymer's Tg by DMA.

In some embodiments, the base polymer (preferably an acrylic polymer) suitably has a glass transition temperature (or "calculated Tg") below 30 °C, determined by the Fox equation based on the composition of the monomers forming the polymer. As shown below, the Fox equation is a relational expression of the Tg of a copolymer and the glass transition temperatures Tgi of the homopolymers obtained by homopolymerization of the monomers constituting the copolymer.

$$1/Tg = \Sigma(Wi/Tgi)$$

In the Fox equation, Tg represents the glass transition temperature (unit: K) of the copolymer, Wi the weight fraction (copolymerization ratio by weight) of a monomer i in the copolymer, and Tgi the glass transition temperature (unit: K) of the homopolymer of the monomer i.

With respect to the glass transition temperatures of the homopolymers used to determine the Tg, the values given in publicly known documents such as "Polymer Handbook" (3rd edition, John Wiley & Sons, Inc., Year 1989) are used. When the Polymer Handbook provides two or more values for a certain monomer, the highest value is used. When no values are found in the Polymer Handbook, values obtained by the measuring method according to Japanese Patent Application Publication No. 2007-51271 are used.

In some embodiments, the base polymer has a calculated Tg of preferably below 25 °C, possibly below 20 °C, below 10 °C, or even below 0 °C. It may be advantageous that the base polymer has not too high a Tg in view of reducing the decrease in tensile modulus due to the use of resin A while obtaining a curable PSA with tack suited for adhesion to adherends. In some embodiments, for instance, in view of increasing the curable PSA layer's conformability to the adherend surface, the base polymer may have a calculated Tg of below -5 °C, or below -10 °C. For instance, it can be below -20 °C, below -25 °C, below -30 °C, further below -40 °C, below -45 °C, below -50 °C, below -55 °C, or even below -60 °C. In view of ease of handling and processing the curable PSA layer, the base polymer's calculated Tg is suitably -80 °C or higher, preferably -75 °C or higher, possibly -65 °C or higher, or even -55 °C or higher. For instance, it can be -50 °C or higher, -45 °C or higher, also -35 °C or higher, or even -25 °C or higher. In some embodiments, the base polymer's calculated Tg can be -15 °C or higher, -10 °C or higher, -5 °C or higher, 0 °C or higher, 5 °C or higher, or even 15 °C or higher. A base polymer with a higher Tg tends to readily bring about a curable PSA that shows a higher tensile modulus (pre-curing tensile modulus). The base polymer's calculated Tg can be adjust by suitably changing the monomer composition (i.e., the species and relative amounts of monomers used for synthesizing the polymer).

The method for polymerizing monomers to obtain the base polymer is not particularly limited. Various polymerization methods can be suitably employed, such as solution polymerization, emulsion polymerization, bulk polymerization, suspension polymerization, photopolymerization, etc. In some embodiments, solution polymerization can be preferably used. The polymerization temperature in the solution polymerization can be suitably selected according to the species of monomers and polymerization solvent to be used, the species of polymerization initiator, and the like. It can be, for example, about 20 °C to 170 °C (preferably about 40 °C to 140 °C, more preferably about 50 °C to 80 °C).

The solvent (polymerization solvent) used in solution polymerization can be suitably selected among heretofore known organic solvents. For instance, one species of solvent or a mixture of two or more species of solvents can be used, selected among aromatic compounds (typically aromatic hydrocarbons) such as toluene; acetic acid esters such as ethyl acetate; aliphatic or alicyclic hydrocarbons such as hexane and cyclohexane; halogenated alkanes such as 1,2-dichloroethane; lower alcohols (e.g. monohydric alcohols with one to four carbon atoms) such as isopropanol; ethers such as tert-butyl methyl ether; and ketones such as methyl ethyl ketone.

The initiator used for polymerization can be suitably selected among conventionally known polymerization initiators according to the type of polymerization method. For example, one or two or more species of azo polymerization initiators such as 2,2'-azobisisobutyronitrile (AIBN) can be preferably used. Other examples of the polymerization initiator include persulfates such as potassium persulfate; peroxide initiators such as benzoyl peroxide and hydrogen peroxide; substituted ethane initiators such as phenyl-substituted ethane; and aromatic carbonyl compounds. Still other examples of the polymerization initiator include redox type initiators based on a combination of a peroxide and a reducing agent. Such polymerization initiators can be used singly as one species or in a combination of two or more species. The amount of the polymerization initiator used may be a usual amount used, for example, about 0.005 to 1 part by weight (typically, about 0.01 part to 1 part by weight) with respect to 100 parts by weight of the monomers.

(Crosslinking agent)

In some embodiments of the PSA sheet disclosed herein, the active energy ray-curable PSA layer is preferably crosslinked. For instance, by using a PSA composition comprising a base polymer and a suitable crosslinking agent, the resulting PSA sheet can have a curable PSA layer with the base polymer crosslinked with the crosslinking agent. A crosslinking agent can be used to adjust the tensile modulus (pre-curing tensile modulus) of the curable PSA layer as well as the tensile modulus of the curable PSA layer after curing (post-curing tensile modulus).

For instance, the PSA sheet having the crosslinked curable PSA layer can be used as follows: Here, in the curable PSA layer, the pre-formed crosslinking structure (e.g., a crosslinking structure formed from the base polymer and crosslinking agent) is referred to as the first crosslinking structure and distinguished from the crosslinking structure (second crosslinking structure) to be newly formed by curing the curable PSA layer by irradiation of active energy rays. After adhered to an adherend, the curable PSA layer is irradiated by active energy rays to cure the curable PSA. This forms a cured material (cured PSA layer) having the first and second crosslinking structures. The first and second crosslinking structures of the cured material are thought to form a so-called interpenetrating polymer network (IPN).

Examples of the crosslinking agent include an isocyanate-based crosslinking agent, epoxy-based crosslinking agent, silicone-based crosslinking agent, oxazoline-based crosslinking agent, aziridine-based crosslinking agent, silane-based crosslinking agent, alkyl-etherified melamine-based crosslinking agent, metal chelate-based crosslinking agent, and peroxide. For the crosslinking agent, solely one species or a combination of two or more species can be used.

The isocyanate-based crosslinking agent is a compound having two or more isocyanate groups (including an isocyanate-regenerating functional group with isocyanate group temporarily protected with blocking agent or by multimerization) per molecule. Examples of the isocyanate-based crosslinking agent include aromatic isocyanates such as tolylene diisocyanate and xylene diisocyanate, alicyclic isocyanates such as isophorone diisocyanate, and aliphatic isocyanates such as hexamethylene diisocyanate.

More specific examples include lower aliphatic polyisocyanates such as butylene diisocyanate and hexamethylene diisocyanate; alicyclic isocyanates such as cyclopentylene diisocyanate, cyclohexylene diisocyanate and isophorone diisocyanate; aromatic diisocyanates such as 2,4-tolylene diisocyanate, 4,4' -diphenylmethane diisocyanate, xylylene diisocyanate and polymethylene polyphenyl isocyanate; isocyanate adducts such as trimethylolpropanetolylene diisocyanate trimer adduct (product name CORONATE L available from Tosoh Corporation), trimethylolpropane-hexamethylene diisocyanate trimer adduct (product name CORONATE HL available from Tosoh Corporation), and isocyanurate of hexamethylene diisocyanate (product name CORONATE HX available from Tosoh Corporation); trimethylolpropane adduct of xylylene diisocyanate (product name D110N available from Mitsui Chemicals, Inc.), trimethylolpropane adduct of hexamethylene diisocyanate (product name D160N available from Mitsui Chemicals, Inc.), polyether polyisocyanate, polyester polyisocyanate, adducts of these and various polyols, and polyisocyanates polyfunctionalized with isocyanurate bonds, biuret bonds, allophanate bonds, etc.

For the isocyanate-based crosslinking agent, solely one species or a combination of two or more species can be used. The amount of isocyanate-based crosslinking agent added per 100 parts by weight of base polymer can be, for instance, 0.01 part or greater, 0.02 part or greater, 0.05 part or greater, 0.1 part or greater, or 0.5 part or greater; and 10 parts or less, 9 parts or less, 8 parts or less, 7 parts or less, 6 parts or less, 5 parts or less, 3 parts or less, or 2 parts or less; for instance, preferably 0.01 part or greater and 10 parts or less, 0.02 part or greater and 9 parts or less, or 0.05 part or greater and 8 parts or less (all parts by weight). In view of the pre-curing and/or post curing tensile modulus and cohesive strength, prevention of peeling in durability test, etc., the amount can be suitably adjusted.

With respect to aqueous dispersions of modified (meth)acrylic polymer prepared by emulsion polymerization, it is not necessary to use an isocyanate-based crosslinking agent. If necessary, a blocked isocyanate-based crosslinking agent can be used as it easily reacts with water.

The epoxy-based crosslinking agent is a polyfunctional epoxy compound having at least two epoxy groups per molecule. Examples of the epoxy-based crosslinking agent include bisphenol A, epichlorohydrin epoxy resin, ethylene diglycidyl ether, N,N,N',N'-tetraglycidyl-m-xylenediamine, diglycidylaniline, diamine glycidylamine, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, glycerin diglycidyl ether, glycerin triglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcine diglycidyl ether, bisphenol-S-diglycidyl ether and an epoxy-based resin having at least two epoxy groups per molecule. For instance, as the epoxy-based crosslinking agent, it is possible to use product names TETRAD C, TETRAD X available from Mitsubishi Gas Chemical, Inc., etc.

For the epoxy-based crosslinking agent, solely one species or a combination of two or more species can be used. The amount of epoxy-based crosslinking agent added per 100 parts by weight of (meth)acrylic polymer is, for instance, 0.01 part or greater, 0.02 part or greater, 0.05 part or greater, or 0.1 part or greater; and 10 parts or less, 9 parts or less, 8 parts or less, 7 parts or less, 6 parts or less, or 5 parts or less; preferably, 0.01 part or greater and 10 parts or less, 0.02 part or greater and 9 parts or less, or 0.05 part or greater and 8 parts or less (by weight). In view of the pre-curing and/or post curing tensile modulus and cohesive strength, prevention of peeling in durability test, etc., the amount can be suitably adjusted.

As the peroxide crosslinking agent, a peroxide that generates radically active species and allows the base polymer to undergo crosslinking can be suitably used. In consideration of efficiency and stability, it is preferable to use a peroxide having a one-minute half-life temperature (or "1-min half-life temp") of 80 °C or higher and 160 °C or lower (more preferably 90 °C or higher and 140 °C or lower).

Examples of the peroxide include di(2-ethylhexyl) peroxydicarbonate (1-min half-life temp: 90.6 °C), di(4-t-butylcyclohexyl) peroxydicarbonate (1-min half-life temp: 92.1 °C), di-sec-butyl peroxydicarbonate (1-min half-life temp: 92.4 °C), t-butyl peroxyneodecanoate (1-min half-life temp: 103.5 °C), t-hexyl peroxypivalate (1-min half-life temp: 109.1 °C), t-butyl peroxypivalate (1-min half-life temp: 110.3 °C), dilauroyl peroxide (1-min half-life temp: 116.4 °C), di-n-octanoyl peroxide (1-min half-life temp: 117.4 °C), 1,1,3,3-tetramethylbutyl peroxy-2-ethylhexanoate (1-min half-life temp: 124.3 °C), di(4-methylbenzoyl) peroxide (1-min half-life temp: 128.2 °C), dibenzoyl peroxide (1-min half-life temp: 130.0 °C), t-butyl peroxyisobutylate (1-min half-life temp: 136.1 °C), and 1,1-di(t-hexylperoxy)cyclohexane (1-min half-life temp: 149.2 °C). Among them, for their especially great crosslinking reaction efficiency, di(4-t-butylcyclohexyl) peroxydicarbonate (1-min half-life temp: 92.1 °C), dilauroyl peroxide (1-min half-life temp: 116.4 °C), dibenzoyl peroxide (1-min half-life temp: 130.0 °C) and the like are preferably used.

The half-life of a peroxide is an index of its rate of decomposition, and refers to the time when half of the peroxide remains. Decomposition temperatures to reach half-lives in given time and half-life periods at given temperatures are found in manufacturer's catalogs etc., for instance, in the 9th edition of "Catalogue of Organic Peroxides" (May 2003) by NOF Corporation.

For the peroxide, solely one species or a combination of two or more species can be used. The amount of peroxide added per 100 parts of base polymer is, for instance, possibly 0.02 part or greater and 2 parts or less, or preferably 0.05 part or greater and 1 part or less (by weight). It can be suitably adjusted within these ranges in view of pre-curing and/or post-curing tensile modulus, ease of processing, reworkability, crosslink stability, removability, etc.

The amount of remaining peroxide after the reaction can be measured, for instance, by HPLC (high-performance liquid chromatography).

More specifically, for instance, about 0.2 g of the post-reaction PSA is collected, immersed in 10 ml of ethyl acetate, shaken and extracted in a shaker at 25 °C and 120 rpm for 3 hours, and then left still at room temperature for 3 days. Subsequently, 10 mL of acetonitrile is added. The resultant is shaken at 25 °C and 120 rpm for 30 minutes and filtered through a membrane filter (0.45 $\mu$m). About 10 $\mu$L of the resulting extract can be injected into HPLC and analyzed to determine the amount of peroxide after the reaction.

As the crosslinking agent, an organic crosslinking agent or polyfunctional metal chelate can also be used together. In a polyfunctional metal chelate, a polyvalent metal is covalently or coordinately bonded to an organic compound. Examples of the polyvalent metal atom include Al, Cr, Zr, Co, Cu, Fe, Ni, V, Zn, In, Ca, Mg, Mn, Y, Ce, Sr, Ba, Mo, La, Sn, and Ti. Examples of atoms in organic compounds that form covalent or coordinate bonds include oxygen atoms. Examples of organic compounds include alkyl esters, alcohol compounds, carboxylic acid compounds, ether compounds, and ketone compounds.

(Photoinitiator)

The curable PSA layer disclosed herein can comprise a photoinitiator as desired. Photoinitiators are excited and activated by irradiation with light (typically UV rays) to generate radicals and accelerate the curing of curable PSAs. Examples include acetophenone-based photoinitiators such as 4phenoxydichloroacetophenone, 4-t-butyl-dichloroacetophenone, diethoxyacetophenone, 2-hydroxy-2-methyl-1-phenylpropan-1 -one, 1-(4-isopropylphenyl)-2-hydroxy-2-methylpropan-1-one, 1-(4-dodecylphenyl)-2-hydroxy-2-methylpropan-1-one, 4-(2-hydroxyethoxy)-phenyl 2-hydroxy-2-propyl ketone, 1-hydroxycyclohexyl phenyl ketone, and 2-methyl-1-[4-(methylthio)phenyl]-2-morpholinopropan-1-one; benzoin-based photoinitiators such as benzoin, benzoin methyl ether, benzoin ethyl ether, benzoin isopropyl ether, benzoin isobutyl ether, and 2,2-dimethoxy-2-phenylacetophenone; benzophenone-based photoinitiators such as benzophenone, benzoylbenzoic acid, methyl 2-benzoylbenzoate, 4-phenylbenzophenone, hydroxybenzophenone, 4-benzoyl-4'-methyldiphenyl sulfide, and 3,3'-dimethyl-4-methoxybenzophenone; thioxanthone-based photoinitiators such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, and 2,4-diisopropylthioxanthone; and special photoinitiators such as $\alpha$-acyloxime ester, acylphosphine oxide, methyl phenylglyoxylate, benzyl, camphorquinone, dibenzosuberone, 2-ethylanthraquinone, and 4',4"-diethyl isophthalophenone. As the photoinitiator, photocationic initiators can also be used, such as allylsulfonium hexafluorophosphate, sulfonium hexafluorophosphates, and bis(alkylphenyl) iodonium hexafluorophosphate. For the photoinitiator, solely one species or a combination of two or more species can be used.

In view of obtaining desirable acceleration of curing while reducing the decrease in hardness (e.g., tensile modulus) due to the addition of photoinitiator, the amount of photoinitiator used per 100 parts by weight of the curable resin in the curable PSA layer can be, for instance, 0.005 part or greater and 50 parts or less, or preferably 0.01 part or greater and 30 parts or less (by weight). In some embodiments, the amount of photoinitiator used per 100 parts by weight of curable resin can be, for instance, 20 parts or less, 10 parts or less, 5 parts or less, or even 3 parts or less (by weight). It is also preferable not to use too much photoinitiator in view of storage stability of the curable PSA.

(Tackifier)

The curable PSA disclosed herein may comprise a tackifier. Examples of the tackifier include rosin-based tackifier resins, terpene-based tackifier resins, phenolic tackifier resins, hydrocarbon-based tackifier resins, ketone-based tackifier resins, polyamide-based tackifier resins, epoxy-based tackifier resins, and elastomer-based tackifier resins. Among these, solely one species or a combination of two or more species can be used. The amount of tackifier resin is not particularly limited and can be set to obtain suitable adhesive performance in accordance with the purpose and application. In some embodiments, the amount of tackifier used per 100 parts by weight of the base polymer is, for instance, 100 parts by weight or less, preferably 60 parts by weight or less, more preferably 40 parts by weight or less, possibly 20 parts by weight or less, or even 10 parts by weight or less. The art disclosed herein can be preferably implemented in an embodiment not using a tackifier.

(Other additives)

As long as the effect of this invention is not significantly impaired, the curable PSA disclosed herein may include, as necessary, known additives that can be used in PSA compositions, such as a leveling agent, antistatic agent, colorant, anti-aging agent, antioxidant, and preservative. With respect to these various additives, known species can be used in a conventional manner, and the present invention is not particularly characterized thereby. Therefore, detailed description will be omitted. The curable PSA disclosed herein may further comprise a curable resin other than the resin A as far as the effect of this invention is not significantly impaired. Examples of curable resins other than resin A include those not corresponding to the resin A among the aforementioned curable resins. Of the total curable resins, the amount of curable resins other than resin A can be, for instance, 50 wt% or less, 20 wt% or less, 10 wt% or less, 5 wt% or less, or 1 wt% or less. There is no need to use any curable resin other than the resin A.

(Formation of curable PSA layer)

The curable PSA layer disclosed herein is formed to be able to cure by irradiation with active energy rays (e.g., light such as UV). Such a curable PSA layer can be formed, using a PSA composition comprising components such as those described above. The form of the PSA composition is not particularly limited and can be, for instance, in a solvent-based, water-dispersed, hot-melt form, etc. In particular, a solvent-based PSA composition is preferable. For instance, a solvent-based PSA composition can be applied to a suitable surface (possibly a release liner's release face, undermentioned substrate surface, etc.) and dried (preferably, further crosslinked) to form a curable PSA. The PSA composition can be applied using a conventional coater, for instance, a gravure roll coater, reverse roll coater, kiss roll coater, dip roll coater, bar coater, knife coater, spray coater, etc.

The curable PSA layer thickness is not particularly limited and can be suitably set in the range of, for instance, about 0.1 $\mu$m to 300 $\mu$m. In view of ease of application to adherends, in some embodiments, the curable PSA layer has a thickness of suitably 1.0 $\mu$m or greater (e.g., greater than 1.0 $\mu$m, 1.2 $\mu$m or greater, or 1.5 $\mu$m or greater), preferably 3.0 $\mu$m or greater, possibly 5.0 $\mu$m or greater, 10.0 $\mu$m or greater (e.g., greater than 10.0 $\mu$m, 10.1 $\mu$m or greater, or 10.5 $\mu$m or greater), 15.0 $\mu$m or greater, 20.0 $\mu$m or greater, or even greater than 20.0 $\mu$m (e.g., 20.1 $\mu$m or greater, 20.5 $\mu$m or greater, or 21.0 $\mu$m or greater). Increases in PSA layer thickness tend to increase the adherend surface conformability and peel strength. In some embodiments, the curable PSA layer can have a thickness of, for instance, 200 $\mu$m or less, 150 $\mu$m or less, 100 $\mu$m or less, 70 $\mu$m or less, 50 $\mu$m or less, or even 30 $\mu$m or less. It can be advantageous that the PSA layer has not too large a thickness in view of thinning and light transmission (e.g., post-curing light transmission) of the PSA sheet, etc. The art disclosed herein can be preferably implemented in an embodiment where the curable PSA layer has a thickness of, for instance, 1.0 $\mu$m or greater and 100 $\mu$m or less (e.g., 5.0 $\mu$m or greater and 50 $\mu$m or less).

(Tensile modulus)

In the art disclosed herein, the curable PSA layer's tensile modulus (i.e., pre-curing tensile modulus) is suitably set in accordance with the purpose and does not need to be constrained by specific upper or lower limits. In view of effectively taking advantage of the benefits obtained by using the resin A, the pre-curing tensile modulus can be, for instance, 0.10 MPa or greater, 0.13 MPa or greater, 0.15 MPa or greater, 0.18 MPa or greater, or even 0.20 MPa or greater. In the PSA sheet for use in an application requiring a higher pre-curing tensile modulus, the pre-curing tensile modulus is, for instance, possibly 0.25 MPa or greater, preferably 0.30 MPa or greater, more preferably 0.35 MPa or greater, also possibly 0.40 MPa or greater, 0.45 MPa or greater, 0.50 MPa or greater, 0.60 MPa or greater, 0.70 MPa or greater, 0.80 MPa or greater, or even 0.90 MPa or greater. For instance, higher pre-curing tensile moduli are required in applications where the curable PSA layer is adhered to an adherend having an uneven structure on the surface and cured by irradiation with active energy rays, desirably without an excess entry of the PSA into recessed parts in the uneven structure (e.g., an application where the adherend is an optical sheet such as a prism sheet or a microlens sheet). In view of efficient application of the curable PSA layer to the adherend, etc., in some embodiments, the pre-curing tensile modulus is suitably 8.00 MPa or less, preferably 7.70 MPa or less, more preferably 7.50 MPa or less, possibly 7.00 MPa or less, 6.50 MPa or less, 6.00 MPa or less, 5.50 MPa or less, 5.00 MPa or less, 4.50 MPa or less, 4.00 MPa or less, 3.50 MPa or less, or even 3.00 MPa or less. In some embodiments, in view of increasing the adherend surface conformability, the pre-curing tensile modulus can be 2.50 MPa or less, 2.00 MPa or less, 1.50 MPa or less, or even 1.00 MPa or less. The art disclosed herein can also be preferably practiced in an embodiment where the pre-curing tensile modulus is less than 1.00 MPa, less than 0.80 MPa, less than 0.50 MPa, or even less than 0.30 MPa.

In the art disclosed herein, the curable PSA layer's tensile modulus after curing (i.e., post-curing tensile modulus) is suitably set in accordance with the purpose and does not need to be constrained by specific upper or lower limits. The post-curing tensile modulus is, for instance, 0.11 MPa or greater, or 0.12 MPa or greater, preferably 0.18 MPa or greater, more preferably 0.23 MPa or greater, possibly 0.25 MPa or greater, or even 0.30 MPa or greater (e.g., 0.35 MPa or greater). In the PSA sheet for use in an application requiring a higher post-curing tensile modulus, the post-curing tensile modulus is, for instance, possibly 0.40 MPa or greater, preferably 0.60 MPa or greater, more preferably 0.80 MPa or greater (e.g., 1.00 MPa or greater), also possibly 1.10 MPa or greater, 1.20 MPa or greater, 1.30 MPa or greater, 1.50 MPa or greater, 1.80 MPa or greater, 2.00 MPa or greater, 2.50 MPa or greater, 3.00 MPa or greater, 3.50 MPa or greater, 4.00 MPa or greater, 4.50 MPa or greater, or even 5.00 MPa or greater. For instance, higher post-curing tensile moduli are required in applications where the curable PSA layer is adhered to an adherend having an uneven structure on the surface and cured by irradiation with active energy rays, desirably with a reduced entry of the PSA into recessed parts in the uneven structure over time after curing (e.g., an application where the adherend is an optical sheet such as a prism sheet or a microlens sheet). The maximum post-curing tensile modulus can be, for instance, 1000 MPa or less, 800 MPa or less, 600 MPa or less, 400 MPa or less, or even 200 MPa or less.

The pre-curing and post-curing tensile moduli are measured by the method described later in Examples.

The post-curing tensile modulus E2 (MPa) to pre-curing tensile modulus E1 (MPa) ratio (i.e., E2/E1) is typically higher than 1.0 (e.g., 1.05 or higher), preferably 1.1 or higher, possibly 1.2 or higher, 1.3 or higher, 1.5 or higher, 2.0 or higher, 5.0 or higher, 7.0 or higher, 10.0 or higher, 12.0 or higher, 15.0 or higher, 20.0 or higher, 25.0 or higher, or even 30.0 or higher. The maximum $E_2/E_1$ is not particularly limited and can be, for instance, 500 or lower, 200 or lower, 150 or lower, 100 or lower, 70 or lower, or even 50 or lower.

In some embodiments, it is preferable that the curable PSA layer has a tensile modulus (pre-curing tensile modulus) of greater than 0.9 as a relative value based on the tensile modulus of the PSA whose composition corresponds to the composition of the curable PSA without the resin A. The relative value of 0.9 or higher means that the decrease in tensile modulus due to the resin A content in the PSA layer is reduced to below 10 %. The relative value is more preferably 1.0 or higher, or above 1.0, yet more preferably 1.1 or higher, possibly 1.2 or higher, or even 1.3 or higher. The upper limit of the relative value is not particularly limited and can be, for instance, 10.0 or lower, 7.0 or lower, or even 3.0 or lower. When the curable PSA layer has a composition including a resin A and a photoinitiator, the relative value is calculated based on the composition of the curable PSA layer excluding the resin A and the photoinitiator.

(Gel fraction)

The curable PSA layer may have a gel fraction (or pre-curing gel fraction, hereinafter) of, for instance, 5 % or higher, 15 % or higher, or even 25 % or higher. In some embodiments, in view of ease of handling and processing the curable PSA layer, the pre-curing gel fraction is suitably 35 % or higher (e.g., 45 % or higher), advantageously higher than 50 % (e.g., 60 % or higher), or preferably 70 % or higher. In some embodiments, the pre-curing gel fraction can be 75 % or higher, 80 % or higher, 85 % or higher, 90 % or higher, 92 % or higher, 94 % or higher, or even 95 % or higher. In view of helping to obtain suitable curability and tack, the maximum pre-curing gel fraction is suitably 99 % or lower, possibly 98 % or lower, 97 % or lower, 96 % or lower, 95 % or lower, 93 % or lower, or even 90 % or lower. In some embodiments, the pre-curing gel fraction can be 88 % or lower, 85 % or lower, 80 % or lower, 60 % or lower, 50 % or lower, 40 % or lower, or even 30 % or lower. The pre-curing gel fraction can be adjusted by selecting the species and Mw of base polymer, selecting the species and amount of resin A, crosslinking agent, etc.

The gel fraction after curing the curable PSA layer with active energy rays (or post-curing gel fraction, hereinafter) is preferably higher than the pre-curing gel fraction. For instance, it can be 35 % or higher, 45 % or higher, 55 % or higher, 65 % or higher, 75 % or higher, 80 % or higher, 85 % or higher, 90 % or higher, or 92 % or higher. The maximum post-curing gel fraction is not particularly limited. It is theoretically 100 % or lower and can be 99 % or lower, or even 98 % or lower.

The pre-curing and post-curing gel fractions are measured by the following method:

[Gel fraction measurement]

A prescribed amount (e.g., about 0.1 g) of PSA sample (weight: $W_{g1}$) is wrapped into a pouch with a porous polytetrafluoroethylene membrane (weight: $Wg_2$; mean pore diameter 0.2 $\mu$m), and the opening is tied with twine (weight: Wgs). As the porous polytetrafluoroethylene membrane, product name NITOFLON® NTF1122 (0.2 $\mu$m mean pore diameter, 75 % porosity, 85 $\mu$m thick) available from Nitto Denko Corporation or an equivalent product is used.

The resulting pouch is immersed in a sufficient volume (e.g., about 50 mL) of ethyl acetate and stored at room temperature (typically 23 °C) for 7 days to extract the sol fraction of the PSA out of the membrane. Subsequently, the pouch is collected, and any residual ethyl acetate is wiped off the outer surface. After drying at 130 °C for 2 hours, the pouch weight ($Wg_4$) is determined. The gel fraction is determined by substituting the respective values into the next equation:

$$\text{Gel Fraction (\%)} = [(Wg_4 - Wg_2 - Wg_3)/Wg_1] \times 100$$

(Adhesive strength)

The PSA sheet disclosed herein preferably has adhesiveness suited for application to adherends. For instance, it suitably shows an adhesive strength of 0.1 N/20mm or greater on polymethyl methacrylate plate (or "PMMA plate" hereinafter). In some embodiments, the adhesive strength on PMMA plate is preferably 0.3 N/20mm or greater (e.g., 0.5 N/20mm or greater), more preferably 1.0 N/20mm or greater (e.g., greater than 1.0 N/20mm, or 1.1 N/20mm or greater), possibly 1.5 N/20mm or greater, 2.0 N/20mm or greater, 3.0 N/20mm or greater, 4.0 N/20mm or greater, 5.0 N/20mm or greater, or even 6.0 N/20mm or greater. The PSA sheet disclosed herein can have an adhesive strength on PMMA plate of, for instance, 25 N/20mm or less, 20 N/20mm or less, 15 N/20mm or less, 12 N/20mm or less, or even 10 N/20mm or less. In some embodiments, for instance, in view of helping to simultaneously obtain a higher pre-curing tensile modulus, etc., the curable PSA layer may have an adhesive strength on PMMA plate of 9.0 N/20mm or less, 8.0 N/20mm or less, or even 7.0 N/20mm or less.

The PSA sheet's adhesive strength on PMMA plate is measured as follows: In an environment at 23 °C and 65 %RH, the PSA sheet is adhered to a PMMA plate; and after 30 minutes, it is measured at a peel angle of 180° and a tensile speed of 300 mm/min. More specifically, the adhesive strength on PMMA plate is determined by the method described later in Examples.

<Substrate>

When the PSA sheet disclosed herein is in the form of a PSA sheet with substrate (conceptually including a single-faced PSA sheet with substrate and a double-faced PSA sheet with substrate, unless otherwise noted), in the PSA sheet with substrate, the substrate material is not particularly limited, and can be suitably selected depending on the purpose and manner of using the PSA sheet. Non-limiting examples of usable substrates include polyolefin films whose primary component is a polyolefin such as polypropylene and ethylene-propylene copolymer; polyester films whose primary component is a polyester such as polyethylene terephthalate and polybutylene terephthalate; polyvinyl chloride films whose primary component is polyvinyl chloride; other plastic films including acrylic resins such as polymethyl methacrylate (PMMA), cellulose resins such as triacetyl cellulose (TAC), polycarbonates, polysulfone, polyarylate, polyphenylene sulfide (PPS), polyamide (nylon), wholly aromatic polyamide (aramid), polyimide (PI), transparent polyimide resin, polyamide-imide (PAI), polyether ether ketone (PEEK), polyethersulfone (PES), cyclic polyolefin resins such as norbornene resin, ethylene-vinyl acetate copolymer (EVA), and polyurethane (PU); foam sheets formed from a foam such as polyurethane foam, polyethylene foam, and polychloroprene foam; woven fabrics and nonwoven fabrics of pure or blended yarns of various fibrous materials (possibly natural fibers such as hemp and cotton, synthetic fibers such as polyester and vinylon, semi-synthetic fibers such as acetate, etc.); papers such as Japanese paper, high-grade paper, kraft paper and crepe paper; and metal foils such as aluminum foil and copper foil. The substrate can be a composite of these.

The substrate thickness is not particularly limited and can be selected depending on the purpose and application. In some embodiments, the substrate may have a thickness of, for instance, 500 $\mu$m or less. In view of the ease of handling and processing the PSA sheet, it is preferably 300 $\mu$m or less, possibly 150 $\mu$m or less, 100 $\mu$m or less, 50 $\mu$m or less, 25 $\mu$m or less, or even 10 $\mu$m or less. With decreasing substrate thickness, the adherend surface conformability tends to improve. In view of the ease of handling, processing, etc., in some embodiments, the substrate may have a thickness of, for instance, 2 $\mu$m or greater, 10 $\mu$m or greater, or even 25 $\mu$m or greater.

The surface of the substrate to be layered with a PSA layer may be subjected to a heretofore known surface treatment as necessary, such as corona discharge treatment, plasma treatment, UV irradiation, acid treatment, alkali treatment, and primer coating to form a primer (undercoat) layer. Such surface treatment may be for enhancement of the anchoring of the PSA layer to the substrate. The composition of the primer used for forming the undercoat layer is not particularly limited and can be suitably selected among conventionally known species. The primer layer thickness is not particularly limited. In typical, it is suitably about 0.01 $\mu$m to 1 $\mu$m, or preferably about 0.1 $\mu$m to 1 $\mu$m. Other treatments that may be applied to the substrate as necessary include antistatic layer formation, colored layer formation, and printing. These treatments can be applied alone or in combination.

When the PSA sheet disclosed herein is a PSA sheet with substrate, the PSA sheet may have a thickness of, for instance, 1000 $\mu$m or less, 350 $\mu$m or less, 200 $\mu$m or less, 120 $\mu$m or less, 75 $\mu$m or less, or even 50 $\mu$m or less. In view of handling properties, etc., the PSA sheet thickness can be, for instance, 10 $\mu$m or greater, 25 $\mu$m or greater, 80 $\mu$m or greater, or even 130 $\mu$m or greater.

The PSA sheet thickness refers to the thickness of the portion applied to an adherend. For instance, in PSA sheet 2 with the configuration shown in Fig. 2, it refers to the thickness from the first surface (adhesive face) 10A of the PSA layer through the second face 20B of substrate 20, not including the thickness of release liner 30.

<Applications>

The PSA sheet disclosed herein can be used for purposes such as fixing, bonding, shaping, decorating, protecting, and supporting components of various products. Examples of the material forming at least the surface of such a member include glass such as an alkaline glass or non-alkaline glass; resin film; metals such as stainless steel (SUS) and aluminum; resin materials such as acrylic resin, ABS resin, polycarbonate resin, polystyrene resin, and polyimide. These components may be constituting, for instance, various portable devices, automobiles and home appliance.

One example of preferable applications is optical application. More specifically, the PSA sheet disclosed herein can be preferably used, for instance, as an optical PSA sheet used for joining optical parts (optical member bonding) or for producing products (optical products) using the optical parts.

The optical member refers to a member having optical properties (e.g., polarizability, light refractivity, light scattering properties, light reflectivity, light transmission, light absorption, light diffraction, optical rotation, visibility, etc.). The optical member is not particularly limited as long as it has optical properties. Examples include components of a device (optical device) such as a display device (an image display unit) and an input device as well as a member used for these devices, for instance, a polarizing plate, waveplate, retardation plate, optical compensation film, glaring film, light guide plate, reflective film, anti-reflection film, hard coat (HC) film, impact-absorbing film, anti-fouling film, photochromic film, light control film, transparent conductive film (ITO film), design film, decorative film, surface protection plate, prism sheet, lens (e.g., microlens sheet) , color filter, transparent substrate, and laminates of these (or collectively referred to as "functional films"). The "plate" and "film" individually encompass forms of plate, film, sheet, etc. For instance, the "polarizing film" includes a "polarizing plate" and "polarizing sheet."

Examples of the display device include a liquid crystal display device, organic EL (electroluminescence) display device, PDP (plasma display panel), and electronic paper. Examples of the input device include a touch panel.

The PSA sheet disclosed herein may also be used as an in-process material that is temporarily used in the process of producing or processing various products or members and is not to be incorporated in final products. For instance, it can be preferably used as a PSA sheet (e.g., dicing tape, back-grinding tape, etc.) for semiconductor processing.

[Examples]

Several working examples related to the present invention are described below, but these specific examples are not to limit the present invention. In the description below, "parts" and "%" are by weight unless otherwise specified. The amount of each material is based on the solid content (non-volatiles (NV)) unless otherwise noted.

«Experiment 1»

<Example 1>

(Preparation of PSA composition)

Into a reaction vessel equipped with a condenser, nitrogen inlet, thermometer and stirrer, were added 95 parts of n-butyl acrylate (BA), 5 parts of acrylic acid (AA), 150 parts of ethyl acetate (polymerization solvent) and 0.2 part of azobisisobutyronitrile (AIBN) (polymerization initiator). Under nitrogen flow, the resulting mixture was stirred for one hour and heated to 63 °C. The reaction was carried out for 6 hours and ethyl acetate was added to obtain a 40 %NV solution of an acrylic polymer (or "Polymer P1" hereinafter). Polymer P1 had a weight average molecular weight (Mw) of $60 \cdot 10^4$. To this solution, for every 100 parts of Polymer P1 therein, were added 5 parts of Curable Resin R1 (urethane acrylate resin, Mw: 5540, $Tg_1$: 2.1 °C, $Tg_2$: 44.5 °C, number of reactive functional groups: 6 to 10), 1.0 part of 1-[4-(2-hydroxyethyl)-phenyl]-2-hydroxy-2-methylpropanone (product name OMNIRAD 2959 available from IGM Resins) as a photoinitiator, and 0.2 part of 1,3-bis(N,N-diglycidylaminomethyl)cyclohexane (product name TETRAD-C available from Mitsubishi Gas Chemical Company, Inc.) as a crosslinking agent. The resultant was uniformly mixed to prepare solvent-based PSA Composition C1.

(Preparation of PSA sheet)

To the releasetreated face of a silicone-release-treated 38 μm thick polyethylene terephthalate (PET) film (product name MRF 38 available from Mitsubishi Chemical Corporation, "Release Liner L1" hereinafter), the resulting PSA Composition C1 was applied to a dry thickness of 25 μm and allowed to dry at 145 °C for 3 minutes. This was adhered to the release-treated face of a silicone-release-treated 38 μm thick PET film (product name MRE 38 available from Mitsubishi Chemical Corporation, "Release Liner L2" hereinafter). In this manner, was obtained PSA Sheet S1 (PSA sheet without substrate, formed of a 25 μm thick UV-curable PSA layer) according to Example 1 as a release-linered PSA sheet protected with Release Liners L1 and L2.

<Example 2>

In place of Curable Resin R1, was used Curable Resin R2 (urethane acrylate resin, Mw: 8430, $Tg_1$: 12.4 °C, $Tg_2$: 66.4 °C, number of reactive functional group: 2). Otherwise in the same manner as the preparation of PSA Composition C1, was prepared PSA Composition C2.
Using PSA Composition C2 in place of PSA Composition C1, but otherwise in the same manner as the preparation of PSA Sheet S1, was obtained PSA Sheet S2 (PSA sheet without substrate, formed of a 25 μm thick UV-curable PSA layer) according to Example 2, as a release-linered PSA sheet.

<Example 3 to 6>

In place of Curable Resin R1, was used Curable Resin R3 (urethane acrylate resin, Mw: 4100, $Tg_1$: 3.7 °C, $Tg_2$: 55.9 °C, number of reactive functional groups: 9, product name UV-7620EA available from Mitsubishi Chemical Corporation), Curable Resin R4 (urethane acrylate resin, Mw: 11000, $Tg_1$: - 22.8 °C, number of reactive functional groups: 9, product name UV-7610B available from Mitsubishi Chemical Corporation), Curable Resin R5 (urethane acrylate resin, Mw: 2400, $Tg_1$: -17.2 °C, number of reactive functional groups: 3, product name UV-7550B available from Mitsubishi Chemical Corporation), or Curable Resin R6 (urethane acrylate resin, Mw: 2000, $Tg_1$: -30.5°C, number of reactive functional groups: 10, product name UV-1700B available from Mitsubishi Chemical Corporation). Otherwise, in the same manner as the preparation of PSA Composition C1, were prepared PSA Compositions C3 to C6.
Using PSA Compositions C3 to C6 in place of PSA Composition C1, respectively, but otherwise in the same manner as the preparation of PSA Sheet S1, were obtained PSA Sheets S3 to S6 (all PSA sheets without substrate, each formed of a 25 μm thick UVcurable PSA layer) according to Examples 3 to 6, each as a release-linered PSA sheet.

<Example 7>

Without using a curable resin or a photoinitiator, but otherwise in the same manner as the preparation of PSA Composition C1, was prepared PSA Composition C7.
Using PSA Composition C7 in place of PSA Composition C1, but otherwise in the same manner as the preparation of PSA Sheet S1, was obtained PSA Sheet S7 (PSA sheet without substrate, formed of a 25 μm thick PSA layer) according to Example 7, as a release-linered PSA sheet.

<Example 8 to 13>

The amounts of Curable Resins R1 to R6 per 100 parts of Polymer P1 were changed to 30 parts. Otherwise in the same manner as the preparation of PSA Compositions C1 to C6, were prepared PSA Compositions C8 to C13.
Using PSA Compositions C8 to C13 in place of PSA Composition C1, respectively, but otherwise in the same manner as the preparation of PSA Sheet S1, were obtained PSA Sheets S8 to S13 (all PSA sheets without substrate, each formed of a 25 μm thick UV-curable PSA layer) according to Examples 8 to 13, each as a release-linered PSA sheet.

<Evaluations>

(Tensile Modulus)

[Pre-curing]

The PSA sheet according to each Example was cut along with Release Liners L1 and L2 into a 30 mm wide, 30 mm long size to prepare a test piece. From the test piece, was removed Release Liner L2. The exposed PSA layer (25 μm thick) was wound into a roll with a cross-sectional area of about 0.75 $mm^2$ to prepare a measurement sample.
In an environment at 23 °C and 65 %RH, the measurement sample roll was set in a tension/compression testing machine (system name AGS-50NX available from Shimadzu Corporation) and stretched in the axial direction of the roll at a chuck distance of 10 mm and a tensile speed of 50 mm/min. In the resulting S-S (strain-strength) curve, with $\sigma_1$ and $\sigma_2$ being the tensile stress corresponding to the tensile strain at two points ($\varepsilon_1$ = 5 %, $\varepsilon_2$ = 10 %), respectively, the PSA layer's tensile modulus (pre-curing tensile modulus) E1 was determined by tensile modulus $E_0 = (\sigma_2 - \sigma_1)/(\varepsilon_2 - \varepsilon_1)$.
Here, tensile strain $\varepsilon$ was determined based on the chuck distance.

$$\varepsilon = (L_1 - L_0)/L_0$$

or

$$\varepsilon\,(\%) = 100 \times (L_1 - L_0)/L_0$$

$\varepsilon$: tensile strain (dimensionless ratio or %)
$L_0$: initial chuck distance (mm)
$L_1$: post-stretching chuck distance (mm)
Tensile stress $\sigma$ was determined based on the cross-sectional area of the measurement sample before stretching.

$$\sigma = F/A$$

$\sigma$: tensile stress (MPa)
F: measurement load (N)
A: cross-sectional area ($mm^2$) of pre-stretching measurement sample

The results are shown in the columns for "Tensile modulus (MPa), Pre-curing" in Tables 1 and 2. The resulting tensile moduli of Examples 1 to 6, 8 to 11 above were converted into relative values with the tensile modulus of Example 7 being 1.0. The values are shown in parentheses in Tables 1 and 2.

[Post-curing]

The PSA sheets (curable PSA layers) of Examples 1 to 6 and 8 to 13 were irradiated with UV and allowed to cure. Subsequently, in the same manner as the measurement of pre-curing tensile modulus E1 described above, the PSA layer's tensile modulus after curing (post-curing tensile modulus) E2 was determined. The results are shown in the column for "Tensile modulus (MPa), Post-curing." The UV irradiation was carried out, using an LED lamp (available from Quark Technology Co., Ltd.; peak illuminance: 200 mW/cm$^2$, cumulative dose: 1500 mJ/cm$^2$ (wavelength 265-365 nm)). The UV illuminance was measured, using a UV Power Puck (available from Fusion UV Systems Japan K.K.).

(Gel fraction)

[Pre-curing]

With respect to the PSA sheet according to each Example, the gel fraction (pre-curing gel fraction) was measured by the aforementioned method. The results are shown in the corresponding columns in Tables 1 and 2.

[Post-curing]

The PSA sheets (curable PSA layers) of Examples 1 to 6 and 8 to 13 were irradiated with UV and allowed to cure. Subsequently, in the same manner, the gel fraction (post-curing gel fraction) was measured. The results are shown in the corresponding columns in Tables 1 and 2. The UV irradiation was carried out, using an LED lamp (available from Quark Technology Co., Ltd.; peak illuminance: 200 mW/cm$^2$, cumulative dose: 1500 mJ/cm$^2$ (wavelength 265-365 nm)). The UV illuminance was measured, using a UV Power Puck (available from Fusion UV Systems Japan K.K.).

(Adhesive strength on PMMA plate)

From the PSA sheet according to each Example, was removed Release Liner L2. The exposed PSA layer was adhered to a 30 $\mu$m thick acrylic resin film with a minimum transmission of 35 % at 265-365 nm wavelength. The resultant was cut into a 20 mm wide, 100 mm long size to obtain a test piece. From the test piece, was removed Release Liner L1. The exposed PSA layer was adhered to a polymethyl methacrylate (PMMA) plate (2 mm thick, product name ACRYLITE available from Mitsubishi Chemical Corporation). The adhesion was achieved by press-bonding with a 2 kg roller moved back and forth once. After 30 minutes from the adhesion to the PMMA plate, using a tension/compression testing machine (system name AGS-50NX available from Shimadzu Corporation), at a tensile speed of 300 mm/min, was measured the 180°-peel adhesive strength (N/20mm) on PMMA plate.

[Table 1]

Table 1

| Example | Polymer P1 (parts) | Curable resin | | | | % gel fraction | | Tensile modulus (Mpa) | | Pre-curing adhesive strength (N/20mm) |
| --- | --- | --- | --- | --- | --- | --- | --- | --- | --- | --- |
| | | Species | $Tg_1$ (°C) | $Tg_2$ (°C) | Amount (parts) | Pre-curing | Post-curing | Pre-curing E1 (relative value) | Post-curing E2 | |
| 1 | 100 | R1 | 2.1 | 44.5 | 5 | 88 | 94 | 0.19 (1.1) | 0.32 | 7.9 |
| 2 | 100 | R2 | 12.4 | 66.4 | 5 | 88 | 93 | 0.18 (1.1) | 0.21 | 7.3 |
| 3 | 100 | R3 | 3.7 | 55.9 | 5 | 87 | 96 | 0.17 (1.0) | 0.37 | 7.8 |
| 4 | 100 | R4 | -22.8 | - | 5 | 88 | 95 | 0.15 (0.9) | 0.27 | 8.8 |
| 5 | 100 | R5 | -17.2 | - | 5 | 87 | 92 | 0.15 (0.9) | 0.22 | 7.4 |
| 6 | 100 | R6 | -30.5 | - | 5 | 88 | 96 | 0.11 (0.7) | 0.37 | N/A |
| 7 | 100 | - | - | - | - | 92 | - | 0.17 (1.0) | - | 7.6 |

[Table 2]

Table 2

| Example | Polymer P1 | Curable resin | | | | % gel fraction | | Tensile modulus (Mpa) | | Pre-curing adhesive strength (N/20mm) |
| | | Species | Tg$_1$ (°C) | Tg$_2$ (°C) | Amount (parts) | Pre-curing | Post-curing | Pre-curing E1 (relative value) | Post-curing E2 | |
|---|---|---|---|---|---|---|---|---|---|---|
| 8 | 100 | R1 | 2.1 | 44.5 | 30 | 76 | 93 | 0.22 (1.3) | 3.11 | 7.4 |
| 9 | 100 | R2 | 12.4 | 66.4 | 30 | 73 | 86 | 0.23 (1.3) | 0.42 | 6.5 |
| 10 | 100 | R3 | 3.7 | 55.9 | 30 | 73 | 97 | 0.17 (1.0) | 6.08 | 10.6 |
| 11 | 100 | R4 | -22.8 | - | 30 | 75 | 97 | 0.10 (0.6) | 1.70 | 9.0 |
| 12 | 100 | R5 | -17.2 | - | 30 | 71 | 95 | 0.13 (0.8) | 2.49 | 3.1 |
| 13 | 100 | R6 | -30.5 | - | 30 | 73 | 98 | 0.09 (0.5) | 14.01 | N/A |
| 7 | 100 | - | - | - | - | 92 | - | 0.17 (1.0) | - | 7.6 |

As shown in Table 1 and 2, the curable PSA layers of Examples 1 to 3 and 8 to 10 comprising Curable Resins R1 to R3 corresponding to the resin A had a tensile modulus E1 equal to or higher than that of the PSA layer of Example 7 without the curable resins. Upon coring with UV irradiation, the tensile moduli of the curable PSA layers of Examples 1 to 3 and 8 to 10 all increased (i.e, E1 < E2). The PSA sheets according to Examples 1 to 3 and 8 to 10 showed adhesive strenght comparable to and higher than that of the PSA sheet of Example 7 formed of the curable-resin-free PSA layer.

«Experiment 2»

<Example 14>

Into a reaction vessel equipped with a condenser, nitrogen inlet, thermometer and stirrer, were added 100 parts of 2-ethylhexyl acrylate (2EHA), 4 parts ofAA, 0.2 part of AIBN (polymerization initiator), and ethyl acetate (polymerization solvent). Under nitrogen flow, the polymerization reaction was carried out at 60 °C to obtain a 35 % ethyl acetate solution of an acrylic polymer (or "Polymer P2" hereinafter) with Mw $\approx 60 \cdot 10^4$. To this solution, for every 100 parts of Polymer P2 therein, were added 5 parts of Curable Resin R1, 1.0 part of 1-[4-(2-hydroxyethyl)-phenyl]-2-hydroxy-2-methylpropanone (product name OMNIRAD 2959 available from IGM Resins) as a photoinitiator, and 1.0 part of isocyanurate of hexamethylene diisocyanate (product name CORONATE HX available from Tosoh Corporation) as a crosslinking agent. The resultant was uniformly mixed to prepare solvent-based PSA Composition C14.

To the releasetreated face of Release Liner L1, the resulting PSA Composition C14 was applied to a dry thickness of 25 $\mu$m and allowed to dry at 145 °C for 3 minutes. This was adhered to the release-treated face of Release Liner L2 and allowed to age at 40 °C for 3 days. In this manner, was obtained PSA Sheet 14 (PSA sheet without substrate, formed of a 25 $\mu$m thick UV-curable PSA layer) according to Example 14 as a release-linered PSA sheet protected with Release Liners L1 and L2.

<Example 15>

The amount of Curable Resin R1 per 100 parts of Polymer P2 was changed to 30 parts. Otherwise in the same manner as the preparation of PSA Composition C14, was prepared PSA Composition C15.

Using PSA Composition C15 in place of PSA Composition C14, but otherwise in the same manner as the preparation of PSA Sheet S14, was obtained PSA Sheet S15 (PSA sheet without substrate, formed of a 25 $\mu$m thick UV-curable PSA layer) according to Example 15.

<Example 16>

Without using a curable resin or a photoinitiator, but otherwise in the same manner as the preparation of PSA Composition C14, was prepared PSA Composition C16.

Using PSA Composition C16 in place of PSA Composition C14, but otherwise in the same manner as the preparation of PSA Sheet S14, was obtained PSA Sheet S16 (PSA sheet without substrate, formed of a 25 $\mu$m thick PSA layer) according to Example 16.

<Evaluations>

In the same manner as in Experiment 1, the tensile modulus, gel fraction, and adhesive strength of the PSA sheet according to each Example were evaluated. The results are shown in Table 3.

[Table 3]

Table 3

| Example | Polymer P2 | Curable resin | | | | % gel fraction | | Tensile modulus (Mpa) | | Pre-curing adhesive strength (N/20mm) |
| | | Species | Tg$_1$ (°C) | Tg$_2$ (°C) | Amount (parts) | Pre-curing | Post-curing | Pre-curing E1 (relative value) | Post-curing E2 | |
|---|---|---|---|---|---|---|---|---|---|---|
| 14 | 100 | R1 | 2.1 | 44.5 | 5 | 85 | 90 | 0.11 (2.1) | 0.12 | 0.5 |
| 15 | 100 | | | | 30 | 70 | 88 | 0.18 (3.2) | 0.25 | 0.3 |
| 16 | 100 | - | - | - | - | 87 | - | 0.05 (1.0) | - | 1.4 |

As shown in Table 3, the curable PSA layers of Examples 14 and 15 comprising Curable Resin R1 corresponding to the resin A had a tensile modulus E1 equal to a higher than that of the PSA layer of Example 16 without the curable resin. Upon curing with UV irradiation, the tensile moduli of the curable PSA layers of Examples 14 to 15 both increased.

With respect to the PSA sheets of Examples 1 to 3, 8 to 10, 14 and 15, the curable PSA layer surfaces all had adequate tack and easily adhered to adherends such as the polymethyl methacrylate (PMMA) plate.

«Experiment 3»

<Example 17>

Into a reaction vessel equipped with a condenser, nitrogen inlet, thermometer and stirrer, were added 74.6 parts of BA, 18.6 parts of N-acryloylmorpholine (ACMO), 6.5 parts of AA, 0.3 part of 4-hydroxybutyl acrylate (4HBA), 0.1 part of AIBN (polymerization initiator), and ethyl acetate (polymerization solvent) in an amount such that the total monomer content was 50 %. Under nitrogen flow, the polymerization reaction was carried out for 8 hours while maintaining the temperature at around 58 °C. Here, after 2 hours from the start of the polymerization reaction, ethyl acetate was added dropwise over 3 hours to a solid content of 35 %. In this manner, was obtained a 35 % ethyl acetate solution of an acrylic polymer (or "Polymer P3" hereinafter) with $Mw \approx 250 \cdot 10^4$. To this solution, for every 100 parts of Polymer P3 therein, were added 3 parts of Curable Resin R1, 1.0 part of 1-[4-(2-hydroxyethyl)-phenyl]-2-hydroxy-2-methylpropanone (product name OMNIRAD 2959 available from IGM Resins) as a photoinitiator, and 0.6 part of 1,3-bis(N,N- diglycidylaminomethyl)cyclohexane (product name TETRAD-C available from Mitsubishi Gas Chemical Company, Inc.) as a crosslinking agent to prepare solvent-based PSA Composition C17.

To the releasetreated face of Release Liner L1, the resulting PSA Composition C17 was applied to a dry thickness of 25 μm and allowed to dry at 145 °C for 3 minutes. This was adhered to the release-treated face of Release Liner L2. In this manner, was obtained PSA Sheet S17 (PSA sheet without substrate, formed of a 25 μm thick UV-curable PSA layer) according to Example 17 as a release-linered PSA sheet protected with Release Liners L1 and L2.

<Example 18>

Without using a curable resin or a photoinitiator, but otherwise in the same manner as the preparation of PSA Composition C17, was prepared PSA Composition C18.

Using PSA Composition C18 in place of PSA Composition C17, but otherwise in the same manner as the preparation of PSA Sheet S17, was obtained PSA Sheet S18 (PSA sheet without substrate, formed of a 25 μm thick PSA layer) according to Example 18.

<Evaluations>

In the same manner as in Experiment 1, the tensile modulus, gel fraction, and adhesive strength of the PSA sheet according to each Example were evaluated. The results are shown in Table 4.

Table 4

| Example | Polymer P3 | Curable resin | | | | % gel fraction | | Tensile modulus (Mpa) | | Pre-curing adhesive strength (N/20mm) |
| | | Species | $Tg_1$ (°C) | $Tg_2$ (°C) | Amount (parts) | Pre-curing | Post-curing | Pre-curing E1 (relative value) | Post-curing E2 | |
|---|---|---|---|---|---|---|---|---|---|---|
| 17 | 100 | R1 | 2.1 | 44.5 | 3 | 96 | 98 | 0.95 (1.1) | 1.35 | 5.9 |
| 18 | 100 | - | - | - | - | 98 | - | 0.84 (1.0) | - | 6.4 |

As shown in Table 4, the curable PSA layer of Example 17 comprising Curable Resin R1 corresponding to the resin A had a tensile modulus E1 comparable to and higher than that of the PSA layer of Example 18 without the curable resin. Upon curing with UV irradiation, the tensile modulus of the curable PSA layer of Examples 17 increased and exhibited comparable adhesive strength to the PSA sheet of Example 18 formed of the curable-resin-free PSA layer.

Although specific embodiments of the present invention have been described in detail above, these are merely for illustrations and do not limit the scope of claims. The art according to the claims includes various modifications and changes made to the specific embodiments illustrated above.

[Reference Signs List]

1, 2 PSA sheet
10 active energy ray-curable PSA layer
10A first surface (adhesive face)
10B second surface
20 substrate
20A first face
20B second face (backside)
30, 31, 32 release liner
50 release-linered PSA sheet

**Claims**

1. A pressure-sensitive adhesive sheet comprising an active energy ray-curable pressure-sensitive adhesive layer, wherein

   the pressure-sensitive adhesive layer is formed of a pressure-sensitive adhesive comprising a base polymer and a resin A, and
   the resin A is an active energy ray-curable resin having a glass transition temperature of 0 °C or higher by DSC analysis.

2. The pressure-sensitive adhesive sheet according to claim 1, wherein the resin A has a weight average molecular weight of 3000 or higher.

3. The pressure-sensitive adhesive sheet according to claim 1 or 2, wherein the resin A is at least one species selected from the group consisting of urethane resins, epoxy resins and acrylic resins.

4. The pressure-sensitive adhesive sheet according to any one of claims 1 to 3, wherein the resin A content in the pressure-sensitive adhesive is 1 % by weight or greater and 70 % by weight or less.

5. The pressure-sensitive adhesive sheet according to any one of claims 1 to 4, wherein the pressure-sensitive adhesive further comprises a photoinitiator.

6. The pressure-sensitive adhesive sheet according to any one of claims 1 to 5, wherein the pressure-sensitive adhesive layer has a tensile modulus E1 (MPa) and a tensile modulus E2 (MPa) after curing of the pressure-sensitive adhesive layer with active energy rays, satisfying the next relational equation $E2/E1 \geq 1.1$.

7. The pressure-sensitive adhesive sheet according to any one of claims 1 to 6, wherein the pressure-sensitive adhesive layer has a gel fraction of 70 % or higher.

8. The pressure-sensitive adhesive sheet according to any one of claims 1 to 7, wherein the pressure-sensitive adhesive layer has a thickness of 1.0 $\mu$m or greater and 100 $\mu$m or less.

9. The pressure-sensitive adhesive sheet according to any one of claims 1 to 8, wherein the base polymer is an acrylic polymer.

**EP 4 389 844 A1**

10. The pressure-sensitive adhesive sheet according to any one of claims 1 to 9, wherein the base polymer has a calculated Tg below 30 °C.

30

[Fig. 1]

50

10B — 32
— 10(1)
10A — 31

FIG.1

[Fig. 2]

50

20B
10B
20A
10A

20 ⎫
      ⎬ 2
10 ⎭
30

FIG.2

## INTERNATIONAL SEARCH REPORT

| International application No. |
| --- |
| **PCT/JP2022/031148** |

**A. CLASSIFICATION OF SUBJECT MATTER**

*C09J 7/38*(2018.01)i; *C09J 133/00*(2006.01)i; *C09J 175/04*(2006.01)i; *C09J 201/00*(2006.01)i
FI: C09J7/38; C09J201/00; C09J133/00; C09J175/04

According to International Patent Classification (IPC) or to both national classification and IPC

**B. FIELDS SEARCHED**

Minimum documentation searched (classification system followed by classification symbols)
C09J; B32B

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2014/003173 A1 (TOAGOSEI CO., LTD.) 03 January 2014 (2014-01-03) claims, paragraphs [0022], [0103]-[0113], [0115], [0129], [0144], examples 1-9 | 1-10 |
| Y | | 7, 10 |
| X | WO 2020/166399 A1 (NITTO DENKO CORP.) 20 August 2020 (2020-08-20) claims, paragraphs [0029], [0034], [0035], [0051], [0053]-[0057], [0062], [0080], [0082], examples 1-4 | 1, 3-10 |
| Y | | 7, 10 |
| A | | 2 |
| X | WO 2012/124389 A1 (LINTEC CORP.) 20 September 2012 (2012-09-20) claims, paragraphs [0007], [0008], [0043], [0044], [0051], [0052], [0054], [0059], [0069], examples 1-5 | 1-6, 8-10 |
| Y | | 10 |
| A | | 7 |

☑ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **16 September 2022** | **27 September 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT

International application No.

**PCT/JP2022/031148**

**C.    DOCUMENTS CONSIDERED TO BE RELEVANT**

| Category* | Citation of document, with indication, where appropriate, of the relevant passages | Relevant to claim No. |
|---|---|---|
| X | JP 2020-041119 A (NITTO DENKO CORP.) 19 March 2020 (2020-03-19)<br>claims, paragraphs [0036], [0039], [0059]-[0063], [0068], [0070], [0078], examples (compositions 1, 4-7, 9, 10, 14, 16, 18, 21) | 1, 3-10 |
| Y | | 7, 10 |
| A | | 2 |
| X | WO 2019/139055 A1 (ARISAWA MANUFACTURING CO., LTD.) 18 July 2019 (2019-07-18)<br>claims, paragraphs [0025]-[0027], [0030]-[0032], [0037], [0041], [0046], [0052], examples 5, 6 | 1, 3-6, 8-10 |
| Y | | 7, 10 |
| A | | 2 |
| P, X | JP 2022-083954 A (SUMITOMO BAKELITE CO., LTD.) 06 June 2022 (2022-06-06)<br>claims, paragraphs [0084]-[0086], [0099]-[0105], [0126], examples 1-3, 5, 6, 8 | 1, 3-6, 8-10 |
| A | Light acrylate, KYOEISHA CHEMICAL CO., LTD., [online], [retrieved on 08 September 2022], Internet: <URL:http://www.kyoeisha.co.jp/product/kinou/lightacrylate.php>, Light acrylate 1, 6HX-A, Light acrylate 1, 9ND-A, Light acrylate DCP-A, Light acrylate 4EG-A, Light acrylate NP-A | 1-10 |
| A | WO 2006/118078 A1 (TOAGOSEI CO., LTD.) 09 November 2006 (2006-11-09)<br>paragraph [0056] | 1-10 |
| A | JP 2021-024886 A (RICOH CO., LTD.) 22 February 2021 (2021-02-22)<br>paragraph [0049] | 1-10 |

Form PCT/ISA/210 (second sheet) (January 2015)

**INTERNATIONAL SEARCH REPORT**
Information on patent family members

| | | | | International application No.<br>**PCT/JP2022/031148** |
|---|---|---|---|---|

| Patent document<br>cited in search report | Publication date<br>(day/month/year) | Patent family member(s) | Publication date<br>(day/month/year) |
|---|---|---|---|
| WO 2014/003173 A1 | 03 January 2014 | (Family: none) | |
| WO 2020/166399 A1 | 20 August 2020 | JP 2020-132658 A<br>CN 113423573 A<br>KR 10-2021-0126632 A<br>TW 202039721 A | |
| WO 2012/124389 A1 | 20 September 2012 | TW 201245376 A | |
| JP 2020-041119 A | 19 March 2020 | JP 2020-41113 A<br><br>US 2020/0231846 A1<br>claims, paragraphs [0045],<br>[0050], [0051], [0072]-<br>[0077], [0082], [0084], [0085],<br>[0095], examples (table 2,<br>compositions 1, 4-7, 9, 10, 14,<br>16, 18, 21)<br>JP 2020-41129 A<br>JP 2020-40389 A<br>JP 2020-40390 A<br>JP 6467551 B1<br>WO 2019/065375 A1<br>KR 10-2019-0070997 A<br>TW 201920558 A<br>KR 10-2019-0096455 A<br>KR 10-2019-0096456 A<br>KR 10-2019-0097304 A<br>CN 110249015 A<br>KR 10-2020-0049699 A<br>CN 111675982 A<br>CN 111876092 A<br>CN 111876095 A<br>CN 111907186 A | |
| WO 2019/139055 A1 | 18 July 2019 | TW 201936855 A | |
| JP 2022-083954 A | 06 June 2022 | (Family: none) | |
| WO 2006/118078 A1 | 09 November 2006 | US 2009/0065140 A1<br>paragraph [0100]<br>EP 1878776 A1<br>KR 10-2008-0003008 A<br>CN 101163767 A<br>TW 200704733 A | |
| JP 2021-024886 A | 22 February 2021 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021135181 A
- JP 2018019022 A
- JP 2003301147 A
- JP 2007051271 A

**Non-patent literature cited in the description**

- Polymer Handbook. John Wiley & Sons, Inc, 1989
- Catalogue of Organic Peroxides. NOF Corporation, May 2003